# FASCICULE DE BREVET EUROPEEN

(11) **EP 4 247 871 B1**
(45) Date de publication et mention de la délivrance du brevet: **23.10.2024**
(21) Numéro de dépôt: 21811081.5
(22) Date de dépôt: 22.11.2021
(51) Int. Cl.: C08G 63/06

(54) **MATÉRIAU POLYMÈRE ÉLASTOMÈRE À PROPRIÉTÉS DE MÉMOIRE DE FORME ET PROCÉDÉ POUR LA PRÉPARATION D'UN TEL MATÉRIAU**
ELASTOMERES POLYMERMATERIAL MIT FORMGEDÄCHTNISEIGENSCHAFTEN UND VERFAHREN ZUR HERSTELLUNG EINES SOLCHEN MATERIALS
ELASTOMERIC POLYMER MATERIAL WITH SHAPE MEMORY PROPERTIES AND METHOD FOR PREPARING SUCH A MATERIAL

(30) Priorité: 23.11.2020 FR 2012018
(43) Date de publication de la demande: 27.09.2023
(73) Titulaire: Institut National de la Recherche pour l'Agriculture, l'Alimentation et l'Environnement, 75007 Paris (FR); Centre National de la Recherche Scientifique, 75016 Paris (FR); Nantes Université, 44035 Nantes Cedex 1 (FR); Ecole Nationale Vétérinaire, Agroalimentaire et de l'Alimentation, 44307 Nantes (FR); Université de Rennes, 35042 Rennes (FR)
(72) Inventeur: BAKAN, Bénédicte, 44300 NANTES (FR); MARION, Didier, 44300 NANTES (FR); LOURDIN, Denis, 44240 Sucé sur Erdre (FR); MARC, Mathilde, 35133 Saint Germain en Coglès (FR); LOPEZ, Christelle, 35740 Pacé (FR); LEROY, Eric, 44360 Saint Etienne de Montluc (FR); ARTZNER, Franck, 35410 Domloup (FR)
(74) Mandataire: Ipside
(86) Numéro de dépôt international: PCT/EP2021/082466
(87) Numéro de publication internationale: WO 2022/106679

(56) Documents cités:
- WO-A1-2011/144792
- JOSÉ J. BENÍTEZ ET AL: "Valorization of Tomato Processing by-Products: Fatty Acid Extraction and Production of Bio-Based Materials", MATERIALS, vol. 11, no. 11, 7 November 2018 (2018-11-07), pages 2211, XP055667880, DOI: 10.3390/ma11112211
- BENÍTEZ JOSÉ JESÚS ET AL: "Polyhydroxyester Films Obtained by Non-Catalyzed Melt-Polycondensation of Natural Occurring Fatty Polyhydroxyacids", FRONTIERS IN MATERIALS, vol. 2, 24 August 2015 (2015-08-24), XP055816189, DOI: 10.3389/fmats.2015.00059

## Description

La présente invention s'inscrit dans le domaine des matériaux polymères, plus spécifiquement de type élastomères, c'est-à-dire dotés de propriétés d'élasticité caoutchoutique.

Plus particulièrement, la présente invention concerne un procédé de préparation d'un tel matériau polymère élastomère, de type polyester, qui est en outre doté de propriétés de mémoire de forme, ainsi qu'un matériau polymère obtenu par un tel procédé, et son utilisation, notamment pour la fabrication d'un dispositif médical.

Par matériau polymère à propriétés de mémoire de forme, on entend dans la présente description, de manière générale, un matériau capable de changer de forme sous l'effet d'une stimulation, notamment thermique, ce changement de forme étant réversible, également sous l'effet d'un stimulus externe tel qu'un stimulus thermique.

Les matériaux polymères à mémoire de forme peuvent ainsi présenter plusieurs formes : une forme de base, dite permanente, et des formes dites temporaires, qui sont obtenues par exposition du matériau à un stimulus externe, généralement à la chaleur et/ou à une contrainte. En particulier, la déformation sous l'effet d'une contrainte du matériau alors qu'au moins un de ses composants se trouve à l'état caoutchoutique ou fondu, suivie d'un refroidissement en dessous de sa température de transition vitreuse ou de fusion, toujours sous contrainte, permet d'obtenir et de fixer une forme temporaire du matériau, par vitrification, ou cristallisation, de ce composant à l'état caoutchoutique ou fondu. L'exposition ultérieure à un stimulus externe, également généralement thermique, entraîne le retour du matériau à sa forme permanente d'origine.

De tels matériaux s'avèrent notamment très utiles dans de nombreux domaines industriels, notamment pour la fabrication de dispositifs médicaux.

Les matériaux polymères à mémoire de forme mis en oeuvre à l'heure actuelle sont généralement des copolymères, dont la préparation nécessite de nombreuses étapes spécifiques, longues à mettre en oeuvre et hautement consommatrices en solvants organiques, ce qui entraine un coût de fabrication élevé. Ces matériaux sont en outre généralement obtenus à partir de matières premières issues de ressources fossiles.

La présente invention vise à remédier aux inconvénients des procédés de préparation de matériaux polymères à mémoire de forme proposés par l'art antérieur, notamment aux inconvénients exposés ci-avant, en proposant un tel procédé qui permette d'obtenir un matériau polymère à propriétés élastomères et de mémoire de forme tout en mettant en oeuvre des matières premières renouvelables, issues de la biomasse, biodégradables et non toxiques, valorisant de la sorte les agro-ressources et minimisant l'impact négatif de tels matériaux polymères sur l'environnement.

Un objectif supplémentaire de l'invention est que ce procédé soit simple et peu coûteux à mettre en oeuvre.

L'invention vise également à ce que ce procédé permette de moduler facilement la température de recouvrance de forme du matériau polymère, c'est-à-dire la température à laquelle il doit être soumis pour retrouver sa forme permanente initiale depuis la forme temporaire dans laquelle il a été conformé. A cet effet, les présents inventeurs se sont plus particulièrement intéressés aux composés d'origine végétale que sont les acides gras de type ω-hydroxylés. Ces acides gras, à longue chaîne carbonée, sont présents en quantité importante dans la nature. Ils peuvent en particulier être extraits des plantes, notamment des cuticules des fruits et légumes, et plus particulièrement de la cutine entrant dans la constitution de ces cuticules.

Un acide gras ω-hydroxylé est défini dans la présente description, de manière classique en elle-même, comme un acide gras contenant au moins un groupement hydroxyle OH en position ω, c'est-à-dire porté par le dernier atome de carbone de la chaine de l'acide gras, le premier atome de carbone de la chaine étant l'atome de carbone du groupement carboxyle de la molécule.

On désigne en outre, par acide gras polyhydroxylé, de manière également conventionnelle, un acide gras comprenant une pluralité de groupements hydroxyle, dont au moins un est situé en position ω. Un acide gras dihydroxylé comprend ainsi deux groupements hydroxyle dont au moins un est situé en position ω, un acide gras trihydroxylé comprend trois groupements hydroxyle dont au moins un est situé en position ω, etc.

Des procédés de préparation de polymères à partir d'acide gras ω-hydroxylés ont été proposés par l'art antérieur. Le document WO 2011/144792 décrit un procédé de synthèse d'un polyester à partir d'acide aleuritique. La publication de Benitez et al. dans Materials, 2018, 11: 2211 décrit un procédé de production de polyesters à partir de monomères extraits de cutine de tomate. La publication de Benitez et al., dans Frontiers in Materials, 2015, 2(59): 1-10, décrit un procédé de préparation de films de polyhydroxyesters par polycondensation de polyhydroxyacides gras naturels. Aucun de ces procédés ne permet d'obtenir un matériau polymère à propriétés élastomères et de mémoire de forme.

Dans des travaux précédents, décrits notamment dans la demande de brevet internationale PCT/EP2020/067548 publiée sous le numéro WO 2020/260312, les présents inventeurs ont mis en oeuvre de tels acides gras ω-hydroxylés, notamment sous forme d'extraits obtenus par dépolymérisation de cutine, pour la fabrication de polymères à capacité de déformation élastique. Ils ont mis en évidence le fait que ces extraits, obtenus par dépolymérisation de cutine, contenaient une certaine quantité de composés phénoliques et caroténoïdes, cette quantité étant évaluée par chromatographie en phase gazeuse couplée à la spectrométrie de masse GC-MS/FID, et par rapport à une gamme étalon externe spécifiquement adaptée à la quantification des acide gras contenus dans l'extrait analysé, plus précisément d'acide heptadécanoïque. La quantité de composés phénoliques totaux contenus dans ces extraits, déterminée par cette méthode de dosage, n'y a été décrite qu'à simple titre indicatif, et de manière largement sous-évaluée. Les inventeurs ont maintenant déterminé, en mettant en oeuvre sur ces extraits une méthode de dosage des composés phénoliques totaux la plus quantitative et la moins spécifique possible, à savoir un dosage spectrophotométrique après réaction avec le réactif de Folin-Ciocalteu, la concentration étant déterminée par rapport à une gamme étalon externe d'acide gallique, que la teneur totale en composés phénoliques dans ces extraits était d'environ 45 mg équivalent d'acide gallique par gramme d'extrait, ce qui équivaut à une teneur totale de 4,5 % en poids de composés phénoliques, par rapport au poids total de l'extrait.

Les présents inventeurs ont maintenant découvert que, de manière tout à fait surprenante, en diminuant la teneur en composés phénoliques totaux dans un tel extrait issu de cutine, en particulier de cutine de tomate, à une plage de valeurs inférieure spécifique, le matériau polymère obtenu par réaction de polymérisation/réticulation à partir d'un tel extrait présente, outre ses propriétés élastomères, des propriétés de mémoire de forme, qui le rendent particulièrement avantageux pour un grand nombre d'applications.

Ainsi, selon un premier aspect, la présente invention concerne un procédé de préparation d'un matériau polymère de type polyester, avantageusement élastomère, sous forme d'un réseau tridimensionnel thermodurci, et à mémoire de forme, ce procédé comprenant, successivement, des étapes de :
- préparation d'un milieu réactionnel comprenant un mélange de :
   - au moins un monomère choisi parmi les acides gras ω-hydroxylés, notamment polyhydroxylés, et les esters d'un acide gras ω-hydroxylé, notamment polyhydroxylé, et d'un alcool à chaine aliphatique linéaire ou ramifiée, saturée ou insaturée, éventuellement substituée, ladite chaine aliphatique comportant de 1 à 18 atomes de carbone ;
   - et au moins un composé phénolique, la teneur totale en composé(s) phénolique(s), déterminée par dosage spectrophotométrique après réaction avec le réactif de Folin-Ciocalteu, par rapport à une gamme étalon d'acide gallique, étant comprise dans une plage de valeurs de 0,3 à 42 mg équivalent d'acide gallique par gramme dudit mélange, ce qui équivaut à 0,03 à 4,2 % en poids par rapport au poids total du mélange ;
- et chauffage de ce milieu réactionnel pour réaliser la polymérisation du monomère et du composé phénolique et la réticulation du polymère ainsi formé.

La méthode de dosage des composé(s) phénolique(s) présents dans une composition par dosage spectrophotométrique après réaction avec le réactif de Folin-Ciocalteu, par rapport à une gamme étalon d'acide gallique, est bien connue de l'homme du métier, et notamment décrite dans la publication de Cabone et al., 2011, Food Chem, 127, 493-500*.* Le réactif de Folin-Ciocalteu, mélange de phosphomolybdate et de phosphotungstate, est en particulier largement disponible dans le commerce.

A titre d'exemple, cette méthode de dosage peut être mise en oeuvre par dissolution de la composition contenant le ou les composé(s) phénolique(s) à doser, à une concentration donnée, par exemple de 5 g/l, dans un mélange d'éthanol et d'eau, notamment dans des proportions volumiques respectives de 70/30. Après ajout d'eau, par exemple 1 ml, puis de réactif de Folin-Ciocalteu, par exemple 1 ml, la réaction est laissée se produire pendant quelques minutes, notamment 3 à 5 minutes. Une solution de carbonate de sodium et d'eau, par exemple concentrée à 10 %, est ensuite ajoutée, notamment dans une quantité de 20 ml, puis la composition obtenue est incubée à température ambiante, à l'abri de la lumière, pendant par exemple 1 h30. L'absorbance de la composition est ensuite lue à 760 nm au moyen d'un spectrophotomètre, de préférence contre un blanc. La teneur en composés phénoliques totaux dans la composition initiale est déterminée par rapport à une courbe d'étalonnage externe d'acide gallique.

Lorsque le milieu réactionnel selon l'invention est préparé par mélange de monomère(s) et composé(s) phénolique(s) purs, l'homme du métier pourra notamment, pour chaque ensemble de monomère(s) et de composé(s) phénolique(s) donné, déterminer par la méthode ci-avant les quantités en poids de composé(s) phénolique(s) correspondant respectivement à une teneur de 0,3 et une teneur de 42 mg équivalent d'acide gallique par gramme du mélange, et mettre en oeuvre toute quantité en poids de composé(s) phénolique(s) située entre les deux valeurs ainsi obtenues.

Le procédé selon l'invention, simple, rapide et peu coûteux à mettre en oeuvre, permet avantageusement de former, par une réaction d'estérification, puis réticulation, un matériau de type polyester thermodurci, à propriétés élastomères, biosourcé, biodégradable et recyclable. Ce matériau polymère, hydrophobe et semi-cristallin, présente, de manière surprenante, des propriétés de mémoire de forme, que ne présentent notamment pas les matériaux polymères obtenus à partir de mélanges similaires, mais contenant plus, ou moins, de composés phénoliques que la teneur préconisée par l'invention. En particulier, la mise en oeuvre d'une teneur totale en composé(s) phénolique(s) inférieure à 0,3 mg équivalent d'acide gallique par gramme du mélange ne permet pas de former un matériau présentant des propriétés de mémoire de forme, ni même un matériau polyester réticulé. La mise en oeuvre d'une teneur totale en composé(s) phénolique(s) supérieure à 42 mg équivalent d'acide gallique par gramme du mélange, ne permet pas non plus d'obtenir un matériau polymère élastomère présentant des propriétés de mémoire de forme.

On ne préjugera pas ici des caractéristiques du matériau polymère obtenu selon l'invention sous-tendant ses propriétés particulièrement avantageuses. On peut cependant supposer qu'elles sont liées à une structure cristalline particulière de ce matériau polymère, qui serait obtenue uniquement dans la plage de teneur totale en composé(s) phénolique(s) préconisée par l'invention, et qui consisterait en un réseau amorphe contenant des empilements de phases cristallines de type hexagonal, ces phases cristallines étant fusibles à une température supérieure à la température ambiante. Il a en outre été mis en évidence par une analyse par calorimétrie différentielle à balayage (DSC, pour l'anglais Differential Scanning Calorimetry) que ces phases cristallines seraient au nombre de deux, et présenteraient des températures de fusion proches.

Le matériau polymère à mémoire de forme obtenu selon l'invention se caractérise en particulier par une transition thermomécanique unique, permettant avantageusement autant sa programmation à chaud, à une température supérieure à la température de fusion de ses phases cristallines, que sa programmation « à froid », c'est-à-dire qu'il est possible de le déformer et de lui donner une forme temporaire à température ambiante, typiquement entre 18 et 25 °C. Sa stimulation par une élévation de la température au-dessus de la température de fusion de ses phases cristallines permet ensuite de déclencher la recouvrance de forme.

Le comportement mécanique du matériau polymère obtenu selon l'invention, dont on peut faire l'hypothèse qu'il sous-tend ces propriétés, présente plus précisément les caractéristiques suivantes :
- pour des températures inférieures à la température de fusion de ses phases cristallines, le matériau a un comportement élastoplastique. Plus particulièrement, pour des déformations inférieures à une vingtaine de %, son comportement est de type élastique. En effet, on observe que la contrainte augmente linéairement avec la déformation jusqu'à atteindre un seuil d'écoulement à 8 MPa pour environ 20 % de déformation uniaxiale. Au-delà de 20 % de déformation, le comportement du matériau devient plastique, un phénomène de striction est observé en traction uniaxiale et la déformation devient permanente, tant que la température reste inférieure à la température de fusion des phases cristallines ;
- pour des températures supérieures à la température de fusion des phases cristallines, le matériau a un comportement hyperélastique, avec une élasticité caoutchoutique typique d'un élastomère. Déformé à chaud, le matériau peut s'étirer de plusieurs centaines de %, et il retrouve sa forme initiale lorsque la contrainte est supprimée.

La transition thermomécanique entre ces 2 comportements, c'est-à-dire élastoplastique à froid et hyperélastique à chaud, est la caractéristique clé du matériau polymère obtenu selon l'invention, qui permet de programmer et déclencher sa mémoire de forme. Déformé plastiquement à chaud ou à froid pour atteindre une forme temporaire programmée, puis chauffé, le matériau polymère obtenu selon l'invention retrouve sa forme initiale. En particulier, pour programmer ce matériau, il est possible de le déformer à une température inférieure à la température de fusion de ses phases cristallines. Il est alors nécessaire d'appliquer une contrainte supérieure à la contrainte au seuil d'écoulement observée lors de tests de traction uniaxiale, qui est d'environ 8 MPa. Une déformation plastique peut ainsi être obtenue, l'élongation devant être supérieure à 20 % et pouvant dépasser 100 %. Ceci doit bien entendu être réalisé sans toutefois atteindre la déformation à rupture du matériau, comprise entre 200 et 400 %.

En outre, les propriétés de mémoire de forme du matériau polymère élastomère formé par le procédé selon l'invention sont avantageusement du type à caractère réversible, c'est-à-dire que ce matériau, après avoir été déformé d'une forme initiale A à une forme B, par chauffage sous contrainte mécanique puis refroidissement sous cette même contrainte, peut ensuite changer de cette forme B à une forme A', plus proche de la forme initiale A, lorsqu'il est soumis à une température spécifique, dite de recouvrance réversible de forme, et que, depuis cette forme A', il reprend spontanément la forme B lorsqu'il est refroidi en dessous de cette température de recouvrance réversible de forme, ceci sans qu'il y ait eu necéssité de lui appliquer une sollicitation mécanique. Là encore, sans préjuger des mécanismes sous-tendant une telle propriété, on peut penser qu'elle pourrait être liée, au moins en partie, à l'existence au sein du matériau polymère de deux formes cristallines distinctes, fondant à des températures proches. Pour un matériau polymère donné, la température de recouvrance réversible de forme peut être déterminée de manière expérimentale, par analyse par DSC, en réalisant des thermogrammes après un traitement thermique du matériau polymère pendant 5 minutes à différentes températures de chauffage, proches des températures de fusion des formes cristallines du matériau polymère. La température de recouvrance réversible de forme correspond alors à la température de chauffage pour laquelle les pics de fusion de ces deux formes cristallines sont les mieux séparés sur le thermogramme obtenu, correspondant à la température à laquelle une seule des deux formes cristallines du matériau se trouve à l'état fondu.

Pour obtenir ce caractère réversible de la mémoire de forme, le matériau polymère doit initialement être déformé, de la forme initiale A à la forme B, à une température supérieure à sa température de fusion (définie ici comme la température correspondant à la fin du dernier pic de fusion observé sur le thermogramme par analyse du matériau polymère par DSC), et inférieure à la température de dégradation du matériau polymère, puis refroidi à température ambiante tout en maintenant la contrainte mécanique. Lorsque le matériau polymère est par la suite porté à la température de recouvrance réversible de forme, sans contrainte, il recouvre partiellement la forme initiale A (forme A'). Refroidi à nouveau, il recouvre la forme B, et ainsi de suite.

Le procédé selon l'invention permet en outre de moduler facilement, en particulier en jouant sur la teneur totale en composé(s) phénolique(s) dans le mélange, et par voie de conséquence sur la quantité de composé(s) phénolique(s) impliqués dans le réseau polymère, tant la température de recouvrance irréversible de forme que la température de recouvrance réversible de forme du matériau polymère.

L'ensemble de ces propriétés rendent le matériau polymère obtenu selon l'invention utilisable dans un grand nombre de domaines et de situations, en adaptant sa température de recouvrance de forme à l'application particulière visée.

On entend dans la présente description, de manière classique en elle-même, par composé phénolique, un composé comprenant un motif phénol. Cette définition englobe les acides-phénols, composés comprenant au moins une fonction acide carboxylique et au moins une fonction hydroxyle phénolique, la fonction acide carboxylique pouvant ou non être située sur le cycle aromatique portant la fonction hydroxyle phénolique.

Préférentiellement, le monomère mis en oeuvre selon l'invention est choisi parmi les acides gras polyhydroxylés et les esters d'un acide gras polyhydroxylé et d'un alcool à chaine aliphatique linéaire ou ramifiée, saturée ou insaturée, éventuellement substituée, ladite chaine aliphatique comportant de 1 à 18 atomes de carbone. Il peut notamment être mis en oeuvre sous forme d'une composition contenant une pluralité acides gras hydroxylés et/ou d'esters d'un acide gras hydroxylé et d'un alcool à chaine aliphatique linéaire ou ramifiée, saturée ou insaturée, éventuellement substituée, ladite chaine aliphatique comportant de 1 à 18 atomes de carbone, cette composition contenant au moins 20 % en poids du monomère par rapport au poids total de la composition.

Le procédé selon l'invention peut en outre répondre à l'une ou plusieurs des caractéristiques décrites ci-après, mises en oeuvre isolément ou en chacune de leurs combinaisons techniquement opérantes.

Ces caractéristiques sont notamment telles que le milieu réactionnel selon l'invention, et le matériau polymère qu'il permet de former, sont de préférence entièrement biosourcés.

Dans des modes de mise en oeuvre particulièrement préférés de l'invention, le milieu réactionnel est exempt de catalyseur, c'est-à-dire de promoteur / accélérateur de réaction. Le milieu réactionnel est en outre de préférence dépourvu de solvant, et de préférence également dépourvu de bloqueur de chaîne.

Le milieu réactionnel selon l'invention peut contenir un ou plusieurs polyols, par exemple du glycérol. Il en est de préférence dépourvu.

Préférentiellement, il est en outre dépourvu de produit(s) de dégradation de composés phénoliques, issus notamment de leur dégradation par une réaction d'oxydation, notamment par traitement au peroxyde d'hydrogène.

Il est également de préférence dépourvu de polysaccharides, de monoglycérides et/ou d'oligomères d'acides gras hydroxylés, les acides gras hydroxylés qui y sont présents l'étant préférentiellement uniquement sous forme de monomères.

Le milieu réactionnel peut toutefois contenir des substances autres que le ou les monomère(s) et le ou les composé(s) phénolique(s), par exemple d'autres acides gras et d'autres composés aromatiques.

Préférentiellement, le milieu réactionnel contient moins de 10 % en poids de composant(s) autre(s) que le ou les composé(s) phénolique(s) et le ou les monomère(s) choisi(s) parmi les acides gras ω-hydroxylés et les esters d'un acide gras ω-hydroxylé et d'un alcool à chaine aliphatique linéaire ou ramifiée, saturée ou insaturée, éventuellement substituée, comportant de 1 à 18 atomes de carbone. Ainsi, le mélange du ou des composé(s) phénolique(s) et du ou des monomère(s) représente de préférence au moins 90 % en poids du milieu réactionnel.

L'étape de préparation du milieu réactionnel du procédé selon l'invention est de préférence réalisée à une température supérieure ou égale à 50 °C.

L'étape de chauffage du procédé selon l'invention est quant à elle mise en oeuvre dans des conditions permettant de réaliser l'estérification d'un ou plusieurs groupements hydroxyles du ou des composé(s) phénolique(s) par la fonction acide du ou des monomère(s), et de sorte à permettre la réticulation du polymère pour former un réseau tridimensionnel thermodurci. Il entre dans les compétences de l'homme du métier de déterminer les conditions de temps et de température à appliquer pour obtenir un tel réseau tridimensionnel thermodurci, en fonction notamment du ou des monomère(s) particulier(s) utilisé(s) et du degré de réticulation souhaité pour le matériau polymère.

Dans des modes de mise en oeuvre particuliers de l'invention, l'étape de chauffage est réalisée dans un intervalle de température compris entre 120 et 200°C, notamment à une température d'environ 150°C.

Elle est en outre de préférence réalisée pendant une durée d'au moins 4 heures, de préférence comprise entre 4 et 60 heures et préférentiellement comprise entre 5 et 28 heures, par exemple entre 22 et 28 heures.

Dans des modes de mise en oeuvre particuliers de l'invention, au moins une phase initiale de l'étape de chauffage est réalisée sous pression réduite. On entend par là qu'une pression réduite est appliquée au moins en début de l'étape de chauffage, dans les premiers temps de cette étape.

Dans des modes de mise en oeuvre préférés de l'invention, au moins la phase initiale de l'étape de chauffage est réalisée à une pression comprise entre 0 et 900 mbar, et préférentiellement comprise entre 400 et 800 mbar. L'application d'une pression dans de telles plages de valeurs, pendant au moins la phase initiale de l'étape de chauffage, permet notamment d'augmenter la vitesse de la réaction de polymérisation du monomère.

Préférentiellement, la durée de la phase initiale de l'étape de chauffage, pendant laquelle il est appliqué une pression réduite, est comprise entre 30 min et 5 heures, de préférence comprise entre 1 h et 3 h, notamment d'environ 90 minutes.

La température appliquée lors de la phase initiale de l'étape de chauffage peut être identique, ou différente, par rapport à la température appliquée lors de la deuxième phase de l'étape de chauffage, qui est définie comme la phase se déroulant après la phase initiale, jusqu'au terme de l'étape de chauffage.

La deuxième phase de l'étape de chauffage peut quant à elle être réalisée pendant une durée adéquate pour obtenir le degré de réticulation souhaité pour le matériau polymère formé. Cette durée est préférentiellement d'au moins 4 heures, et de préférence comprise entre 4 et 48 heures, par exemple d'environ 24 heures.

Aucun réactif ni autre substance n'est de préférence ajouté dans le milieu réactionnel avant ou pendant la deuxième phase de l'étape de chauffage.

Dans des modes de mise en oeuvre particuliers de l'invention, le procédé selon l'invention comprend, pendant l'étape de chauffage, avant que le point de gel du polymère ait été atteint, une étape d'élimination des bulles présentes dans le milieu réactionnel. Cette étape peut être réalisée par tout moyen, par exemple par agitation, manuelle ou automatique, du milieu réactionnel. Elle peut être mise en oeuvre de manière continue, par exemple pendant toute la durée de la phase initiale de l'étape de chauffage, ou bien être réalisée ponctuellement, à une ou plusieurs reprises lors de l'étape de chauffage, et dans ce cas préférentiellement au moins une fois juste avant, par exemple 1 à 5 minutes avant, que le point de gel du polymère ait été atteint. Dans un mode de mise en oeuvre particulier de l'invention, l'étape d'élimination des bulles présentes dans le milieu réactionnel comprend au moins une phase d'agitation du milieu réactionnel juste avant que le polymère présent dans le milieu réactionnel ait atteint son point de gel, par exemple lorsqu'est atteint le plus long temps de réaction pour lequel le milieu réactionnel reste totalement soluble en présence du solvant dans le test de solubilité décrit ci-après. Le chauffage du milieu réactionnel peut optionnellement être interrompu pendant une phase d'agitation ponctuelle du milieu réactionnel visant à en éliminer les bulles qui s'y sont formées.

De manière classique en elle-même, comme pour tout procédé conduisant à la formation d'un réseau polymère réticulé chimiquement, le point de gel est ici défini comme le moment où un réseau tridimensionnel solide apparait dans le milieu réactionnel liquide. Le temps de gel correspond à l'intervalle de temps entre le début de la réaction et le moment où le point de gel est atteint dans le milieu réactionnel. L'apparition de ce réseau solide entraîne une divergence de la viscosité en écoulement, qui tend vers l'infini au temps de gel. Par ailleurs, ce réseau solide est par nature insoluble dans les solvants. Il est donc possible de détecter son apparition, c'est-à-dire l'occurrence du point de gel, par un test de solubilité dans un solvant capable de solubiliser les composants du milieu réactionnel initial.

Il est du ressort de l'homme du métier de déterminer, pour chaque ensemble de conditions opératoires spécifiques du procédé selon l'invention, le temps de gel nécessaire pour parvenir à ce point de gel. A cet effet, l'homme du métier pourra notamment procéder de manière empirique, par exemple par des essais de solubilisation du milieu réactionnel après différents temps de réaction, dans un solvant capable de solubiliser le milieu réactionnel initial. Le temps de gel sera alors compris entre le plus court temps de réaction conduisant à l'observation d'une fraction insoluble dans le solvant utilisé pour le test de solubilité, et le plus long temps de réaction pour lequel le milieu réactionnel reste totalement soluble en présence de ce solvant. A titre d'exemple, après différents temps de réaction, un échantillon de 10 mg de milieu réactionnel peut être ainsi incorporé dans 1 ml de solvant, par exemple d'éthanol. Après 5 minutes de vortexage, on observe l'apparition éventuelle d'une fraction insoluble dans le mélange, qui témoigne du fait que le point de gel a été atteint, et le temps de gel dépassé. Un tel test de solubilité peut être effectué à intervalles très rapprochés, par exemple toutes les 10 secondes, afin de déterminer le temps de gel de manière la plus précise possible. Ce test de solubilité peut être réalisé sur un milieu réactionnel témoin, notamment de faible volume, afin de déterminer le temps de gel du polymère dans les conditions opératoires qui seront ensuite appliquées pour la mise en oeuvre du procédé selon l'invention proprement dit.

L'ensemble des étapes du procédé selon l'invention sont de préférence réalisées en récipient unique, de préférence dans un moule présentant une forme adéquate pour l'application visée du matériau polymère obtenu à l'issue du procédé. L'ensemble des phases de l'étape de chauffage sont en outre de préférence réalisées au moyen d'un même dispositif de chauffage.

Le dispositif de chauffage dans lequel est mis en oeuvre le procédé selon l'invention est classique en lui-même. Il s'agit notamment d'un four, pouvant présenter une ou plusieurs zones de température, équipé de moyens pour y établir une pression réduite, ainsi que, de préférence, de moyens d'agitation d'un récipient / moule placé en son intérieur.

Le procédé selon l'invention peut aussi bien mettre en oeuvre un seul composé phénolique, qu'une pluralité de tels composés.

Préférentiellement, le mélange d'au moins un monomère et au moins un composé phénolique contient au moins un composé phénolique choisi parmi les acides hydroxybenzoïques, les acides hydroxycinnamiques et les flavonoïdes, ou une combinaison quelconque de tels composés phénoliques. Ce mélange contient de préférence au moins un, ou encore au moins deux, au moins trois, au moins quatre, au moins cinq, au moins six, au moins sept, au moins huit, au moins neuf, ou l'ensemble, des composés phénoliques suivants, ou de leurs dérivés : acide 2-hydroxybenzoïque, acide p-coumarique, acide cis-p-coumarique, acide férulique, myricétine, naringénine, acide 2-méthylcoumarique, quercétine rhamnoside, quercétine-déoxyhexose, déoxyhexosyl-dihydrokaempférol.

Dans des modes de mise en oeuvre particulièrement avantageux de l'invention, le mélange contient au moins de l'acide p-coumarique et/ou de la naringénine.

La teneur totale en composé(s) phénolique(s), déterminée par dosage spectrophotométrique après réaction avec le réactif de Folin-Ciocalteu, par rapport à une gamme étalon d'acide gallique, est de préférence comprise dans une plage de valeurs de 0,3 à 25 mg équivalent d'acide gallique par gramme du mélange, ce qui équivaut à 0,3 à 2,5 % en poids par rapport au poids total du mélange.

Le procédé selon l'invention peut mettre en oeuvre un seul monomère choisi parmi les acides gras ω-hydroxylés et les esters d'un acide gras ω-hydroxylé et d'un alcool à chaine aliphatique linéaire ou ramifiée, saturée ou insaturée, éventuellement substituée, comportant de 1 à 18 atomes de carbone, ou une pluralité de tels monomères.

L'acide gras ω-hydroxylé mis en oeuvre dans le procédé selon l'invention peut être linéaire ou ramifié, c'est-à-dire consister en un acide carboxylique à chaine aliphatique linéaire ou ramifiée portant une ou plusieurs fonctions hydroxyles, dont une au moins est située en position terminale de ladite chaine. L'acide gras ω-hydroxylé mis en oeuvre selon l'invention peut notamment répondre à la formule générale (I) :

(HO)CₙH₂ₙ₋ₘ₋₂ₚ(OH)ₘCOOH (1)

dans laquelle :
n est un nombre entier compris entre 7 et 21, de préférence entre 12 et 20, de préférence encore entre 13 et 19, préférentiellement entre 15 et 17,
m est un nombre entier supérieur ou égal à 0, de préférence compris entre 1 et 3, et préférentiellement égal à 1,
p représente le nombre d'insaturations contenues dans ledit acide gras et est un nombre entier compris entre 0 et 3, de préférence égal à 0.

Les esters d'acide gras ω-hydroxylé pouvant être mis en oeuvre selon l'invention peuvent notamment répondre à la formule générale (II) :

(HO)CₙH₂ₙ₋ₘ₋₂ₚ(OH)ₘCOOR (II)

dans laquelle :
n, m et p sont comme définis précédemment,
et R représente une chaine aliphatique linéaire ou ramifiée, saturée ou insaturée, éventuellement substituée, comportant de 1 à 18 atomes de carbone, de préférence de 1 à 6 atomes de carbone, préférentiellement un radical méthyle ou un radical éthyle.

On entend dans la présente description, par chaine aliphatique, une chaine carbonée ouverte non-aromatique.

Dans des modes de mise en oeuvre particuliers de l'invention, le monomère est un ester méthylique ou éthylique d'un acide gras ω-hydroxylé, de préférence polyhydroxylé, et notamment dihydroxylé.

Des caractéristiques préférentielles des acides gras ω-hydroxylés pouvant être mis en oeuvre dans le procédé selon l'invention sont exposées de manière détaillée ci-après. Les mêmes caractéristiques sont transposables à l'identique aux esters d'un acide gras ω-hydroxylé et d'un alcool à chaine aliphatique linéaire ou ramifiée, saturée ou insaturée, éventuellement substituée, comportant de 1 à 18 atomes de carbone.

Préférentiellement, au moins un monomère mis en oeuvre dans le procédé selon l'invention est un acide gras polyhydroxylé, de préférence dihydroxylé, c'est-à-dire dont la chaine carbonée porte deux groupements hydroxyles, dont l'un est situé en bout de chaîne. L'acide gras ω-hydroxylé porte en outre préférentiellement une seule fonction acide.

Ainsi, dans des modes de mise en oeuvre particuliers de l'invention, un monomère mis en oeuvre est un acide gras dihydroxylé, de préférence à une seule fonction acide.

Des exemples d'acides gras ω-hydroxylés pouvant être mis en oeuvre en tant que monomère dans le procédé selon l'invention sont, non limitativement, l'acide 16-hydroxyhexadecanoïque, l'acide 10,16-dihydroxyhexadécanoïque, l'acide 16-hydroxy-10-oxo-hexadecanoïque, l'acide 10-hydroxyhexadecanedioïque, l'acide 18-hydroxyoctadec-9-enoïque, l'acide 18-hydroxy-9,10-epoxyoctadecanoïque ou l'acide 9,10,18-trihydroxyoctadecanoïque.

Le mélange mis en oeuvre selon l'invention contient de préférence, à titre de monomère, au moins de l'acide 10,16-dihydroxyhexadécanoïque, de formule (I') ci-dessous :

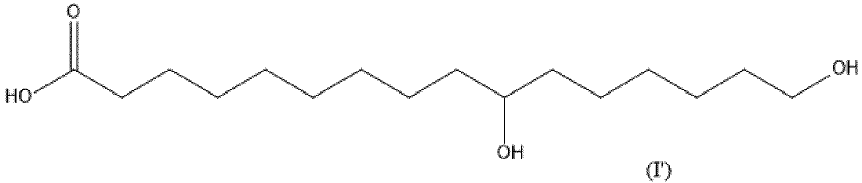

Des esters particulièrement adaptés à la mise en oeuvre du procédé selon l'invention sont les esters méthylique et éthylique de l'acide 10,16-dihydroxyhexadécanoïque.

Le ou les acides gras ω-hydroxylés mis en oeuvre en tant que monomères dans le procédé selon l'invention, de même que le ou les composé(s) phénolique(s), peuvent être synthétisés par voie chimique.

Les uns comme les autres peuvent autrement être extraits à partir de végétaux, plus particulièrement à partir de la cuticule des plantes, et plus précisément encore de la cutine, par dépolymérisation de la cutine par méthode enzymatique ou par hydrolyse acide ou basique, et séparation, du milieu de dépolymérisation, de l'extrait de monomères issu de la dépolymérisation.

La cutine est un réseau polymère d'acides gras polyhydroxylés, pour la majorité en C16 et C18, réticulés par des liaisons ester, qui est impliqué dans l'imperméabilisation des feuilles et des fruits des plantes supérieures. Il s'agit du composant principal de la cuticule de la plante, la membrane lipidique continue extracellulaire qui couvre les parties aériennes de feuilles et de fruits des plantes.

Dans des modes de mise en oeuvre particulièrement préférés, l'invention tire avantageusement profit du fait que les extraits de monomères issus de la dépolymérisation de cutine, contenant majoritairement au moins un acide gras ω-hydroxylé, contiennent également des composés phénoliques, en quantité supérieure à la teneur préconisée par l'invention dans le mélange d'au moins un monomère et d'au moins un composé phénolique.

Ainsi, dans des modes de mise en oeuvre préférés de l'invention, le mélange de monomère(s) et de composé(s) phénolique(s) utilisé dans le procédé selon l'invention est obtenu par dépolymérisation de cutine, récupération de l'extrait de monomères obtenu, c'est-à-dire séparation de cet extrait du milieu de dépolymérisation, et purification de cet extrait pour en éliminer partiellement les composés phénoliques qui y sont contenus, de sorte à obtenir une teneur en composés phénoliques comprise dans la plage de valeurs préconisée par la présente invention.

La cutine à partir de laquelle est obtenu l'extrait de monomères selon l'invention est de préférence la cutine de tomate.

De manière plus générale, préférentiellement, le ou les acides gras ω-hydroxylés mis en oeuvre en tant que monomères dans le procédé selon l'invention, et/ou le ou les composé(s) phénolique(s), sont extraits de la tomate, qui présente l'avantage d'une grande homogénéité de constitution de la cutine d'une espèce à l'autre, cette cutine présentant en outre un monomère constitutif en quantité largement majoritaire : l'acide 10,16-dihydroxyhexadécanoïque, qui y est présent à plus de 80 % en poids.

Les déchets de transformation des tomates, nommés drèches de tomate, contiennent une quantité importante de cutine, plus précisément 60 à 70 %. On estime à 4 à 5 millions de tonnes la quantité de drèches de tomates produites chaque année dans le monde. Ainsi, le procédé selon l'invention peut tout à fait avantageusement permettre de valoriser les déchets agricoles et industriels que constituent les drèches de tomate, ce qui s'avère d'un grand intérêt tant du point de vue environnemental qu'économique.

Autrement, le mélange mis en oeuvre dans le procédé selon l'invention, ou l'un ou plusieurs de ses constituants, peuvent être obtenus à partir d'autres végétaux, tels que la pomme (*Malus pumila*), le bigaradier (*Citrus aurantium*)*,* les fèves (*Vicia faba*), le merisier (*Prunus avium*), la canneberge (*Vaccinium macrocarpon*), le fruit de la vigne (*Vitis vinifera*), la graine des pois (*Pisum sativum*)*,* les fruits des groseillers à maquereau (*Ribes grossularia*), la papaye (*Malabar papaiarnarum*)*,* les feuilles d'agave (*Agave americana*), les graines de pamplemousse (*Citrus paradisi*), le citron (*Citrus limon*), le citron vert (*Citrus aurantifolia*), les fruits du papayer (*Carica papaya*), l'oignon (*Allium cepa*), les airelles (*Vaccinium vitis idaea*), les feuilles de caféier (*Rubiaceae coffea*), les fruits de l'églantier (*Rosa canina*), les courges (*Cucurbita pepo*), etc., l'extrait issu de ces végétaux étant ensuite soumis à purification pour en éliminer partie des composés phénoliques, de sorte à obtenir la plage de valeurs préconisée par la présente invention pour la teneur en composés phénoliques.

Tout procédé d'extraction de la cutine des végétaux, notamment de fragmentation des drèches de tomate ou des peaux de tomate, et tout procédé de dépolymérisation de cette cutine, de sorte à obtenir un mélange du ou des acides gras ω-hydroxylés utilisés en tant que monomère(s) selon l'invention et du ou des composé(s) phénolique(s), peuvent être mis en oeuvre selon l'invention. Schématiquement, ces méthodes comprennent la fragmentation des drèches de tomate, ou autres éléments végétaux, tels que la pomme, pour en extraire la cutine, puis l'hydrolyse de la cutine pour en obtenir les monomères constitutifs. Après isolation, par des méthodes de séparation physique ou par extraction liquide-liquide, la cutine est ainsi hydrolysée chimiquement, en particulier par voie alcaline en milieu organique, ou à l'aide d'enzymes spécifiques, notamment des cutinases.

La récupération de l'extrait de monomères obtenu par dépolymérisation de la cutine, c'est-à-dire la séparation de cet extrait du milieu de dépolymérisation, peut être réalisée de toute manière connue de l'homme du métier, par exemple par filtration, puis précipitation en milieu acide ou basique, et séparation par filtration, centrifugation, etc.

Dans des modes de mise en oeuvre particuliers de l'invention, l'extrait issu de la dépolymérisation de cutine, récupéré par sa séparation du milieu de dépolymérisation, contient de préférence au moins 20 %, de préférence au moins 80 %, en poids du monomère par rapport au poids total de l'extrait.

Un exemple de méthode pouvant être mise en oeuvre pour la formation et la récupération d'un extrait de monomères issu de la dépolymérisation de cutine est décrit dans le document WO 2015/028299. Cette méthode comprend, schématiquement, le traitement thermique de peaux de tomate, puis leur introduction dans une solution alcaline, par exemple d'hydroxyde de potassium à une concentration entre 0,5 M et 6 M, à une température comprise entre 20 °C et 130 °C, par exemple entre 65 °C et 130 °C. La solution peut par exemple ensuite être filtrée, puis acidifiée, notamment avec de l'acide chlorhydrique à une concentration comprise entre 12 M et 6 M. Après centrifugation, par exemple à 10 000 à 14 000 tr/min pendant 15 à 20 minutes, le culot est lavé, par exemple à l'eau déminéralisée, puis le cas échéant séché. Une méthode préférée selon l'invention consiste, après une étape de décantation de drèches de tomate pour récupérer les peaux, et le séchage, le broyage et la délipidation des peaux ainsi récupérées, à les hydrolyser en milieu alcalin dans un solvant alcoolique. A titre d'exemple, une telle hydrolyse peut être réalisée par immersion des peaux délipidées et déshydratées dans de la potasse alcoolique (par exemple formée de 5 % de potasse dans l'éthanol anhydre), à 50 °C, pendant 6 heures à 5 jours, de préférence pendant 2 jours. Le mélange peut ensuite être filtré sous vide, et l'éthanol éliminé grâce à un évaporateur rotatif. Les acides gras contenus dans la composition obtenue peuvent être précipités, notamment dans l'eau à pH entre 2 et 3, par exemple dans une solution d'acide chlorhydrique à 37 %, puis récupérés, notamment par centrifugation, par exemple à 9000 tr/min pendant 20 minutes. Après rinçage(s) du culot obtenu à l'eau déminéralisée et lyophilisation, on obtient, avec un rendement compris entre 60 et 70 %, une composition huileuse contenant essentiellement des acides gras, dont très majoritairement de l'acide 10,16-dihydroxyhexadécanoïque. Plus précisément, cette composition huileuse obtenue à l'issue des opérations de dépolymérisation de la cutine contient au moins 85 % en poids d'acides gras. L'acide 10,16-dihydroxyhexadécanoïque y représente de préférence au moins 88% en poids de ces acides gras. Elle contient également des composés phénoliques, en particulier de l'acide p-coumarique et de la naringénine en quantités majoritaires, la teneur totale en composés phénoliques, mesurée par la méthode préconisée par l'invention, étant d'environ 45 mg équivalent d'acide gallique par gramme de composition.

L'ester d'acide gras polyhydroxylé pouvant être mis en oeuvre selon l'invention peut quant à lui être préparé par estérification de l'acide gras correspondant selon toute méthode classique en elle-même pour l'homme du métier, sans catalyse ou de préférence avec catalyse acide. Il peut autrement être obtenu par transestérification des acides gras polyhydroxylés contenus dans les cutines de végétaux, de préférence opérée en catalyse acide ou en catalyse basique, à l'aide d'une base forte ou d'alcoolates comme le méthanolate de sodium ou l'éthanolate de sodium. L'alcool utilisé pour réaliser la réaction d'estérification ou de transestérification de l'acide gras comporte de préférence de 1 à 18 atomes de carbone et préférentiellement de 1 à 8 atomes de carbone. Il est de préférence choisi parmi le méthanol, l'éthanol, le propanol, le butanol, le pentanol, l'hexanol et ses isomères dont le 2-éthyl-butanol, l'heptanol et ses isomères comme le 2-heptanol, l'octanol et ses isomères comme le 2-éthyl-hexanol, et aussi l'isopropanol, le 2 méthyl-propanol, le 2 méthyl-propane-2-ol, le butan-2-ol, les alcools amyliques, le 2-methyl-butanol, le 3-methyl-butanol, le 2,2 diméthylpropanol, le pentan-3-ol, le pentan-2-ol, le 3-méthylbutan-2-ol, le 2-méthylbutan-2-ol, les alcools de guerbet comme le 2-propyl-heptanol, le 2 butyl-octanol.

A titre d'exemple, un ester d'acide gras polyhydroxylé pouvant être mis en oeuvre dans le procédé selon l'invention peut être directement produit à partir de peaux de tomates, par mise en contact de ces peaux avec de l'alcool, en particulier du méthanol ou de l'éthanol, en présence d'un acide, par exemple de 2 à 5 % d'acide sulfurique concentré, à une température comprise entre 50 et 70 °C pendant au moins 6 heures. Les esters d'acides gras obtenus à l'issue de la réaction de transestérification peuvent être récupérés par addition d'eau dans le milieu réactionnel puis centrifugation. Là encore, l'extrait ainsi récupéré les contient en mélange avec des composés phénoliques, ces derniers étant présents dans une teneur totale supérieure à celle préconisée par l'invention. La teneur en composés phénoliques préconisée par l'invention est alors atteinte par une étape de purification des esters d'acides gras réalisée de sorte à éliminer partiellement les composés phénoliques présents.

Dans des modes de mise en oeuvre particuliers de l'invention, le mélange du ou des monomère(s), que ceux-ci soient sous forme d'acides ou d'esters, et du ou des composé(s) phénolique(s), consiste ainsi en un extrait issu de la dépolymérisation de cutine, de préférence de cutine de tomate, après purification des acides gras hydroxylés contenus dans cet extrait pour en éliminer partiellement les composés phénoliques, jusqu'à atteindre la teneur préconisée par l'invention. Cet extrait, qui est préférentiellement riche en acides gras dihydroxylés, contient de préférence au moins 20 %, de préférence au moins 80 %, en poids du monomère par rapport au poids total d'acides gras hydroxylés contenus dans la composition. Le monomère peut y être présent sous forme d'acide ou sous forme d'ester, selon le mode opératoire qui a été utilisé pour réaliser la dépolymérisation de la cutine.

Préférentiellement, le milieu réactionnel selon l'invention consiste en un tel extrait après sa purification.

L'étape de purification de l'extrait de monomères récupéré après dépolymérisation de cutine, notamment de cutine de tomate, peut être réalisée par toute méthode classique en elle-même pour l'homme du métier, notamment par chromatographie, par exemple par chromatographie sur colonne de silice, ou chromatographie de partage centrifuge.

A titre d'exemple, l'extrait peut être purifié par chromatographie sur colonne de silice de type amino-propyle. L'élution peut par exemple être réalisée avec un mélange de chloroforme et d'isopropanol, puis un mélange de chloroforme et d'acide acétique.

Par exemple, l'étape de purification peut être réalisée en solubilisant l'extrait d'acides gras dans un mélange de chloroforme et d'isopropanol (2:1 v:v) et en le déposant sur une colonne de silice aminée conditionnée dans ce mélange de solvants, par exemple à raison de 8 g d'extrait pour 100 g de silice. Après une première élution par ce même mélange de solvants, entre 5 et 10 volumes de colonne, les acides gras sont élués par un mélange de chloroforme et d'acide acétique glacial (98:2 v:v, 10 à 15 volumes de colonne). Après évaporation des solvants sous vide, on obtient l'extrait purifié.

Pour optimiser la purification, une variante de cette technique peut utiliser d'abord une colonne de silice non greffée, c'est-à-dire non aminée, avec une élution par un mélange de chloroforme et de méthanol (93:7 v:v). Après évaporation des solvants l'extrait partiellement purifié obtenu est soumis à une nouvelle étape de purification sur une colonne de silice aminée selon le protocole décrit ci-dessus. Cette purification à deux étapes de chromatographie permet d'obtenir des extraits dont le degré de purification est plus élevé.

Le procédé selon l'invention peut comprendre une étape préalable de pré-purification, par exemple par passage de l'extrait de monomères sur une masse filtrante de kaolin. Une telle étape préalable, notamment réalisée en amont d'une étape de purification par chromatographie sur colonne de silice aminée, permet notamment avantageusement de diminuer le coût global de la purification.

Selon un deuxième aspect, l'invention concerne un matériau polymère, de type polyester, hydrophobe, susceptible d'être obtenu par un procédé selon l'invention. Ce matériau polymère présente avantageusement des propriétés élastomères et des propriétés de mémoire de forme.

Il comprend, en tant qu'unités monomères constitutives, au moins un acide gras ω-hydroxylé et au moins un composé phénolique. Il présente en outre une structure semi-cristalline comprenant des empilements de phases cristallines de type hexagonal. Il contient une quantité de 0,03 à 4,2 % en poids d'unités composé(s) phénolique(s), par rapport au poids total dudit matériau polymère, cette quantité étant déterminée par dosage de la teneur totale en composé(s) phénolique(s) dans le mélange mis en oeuvre pour la préparation du matériau polymère, par dosage spectrophotométrique après réaction avec le réactif de Folin-Ciocalteu, par rapport à une gamme étalon d'acide gallique, cette teneur totale étant comprise dans une plage de valeur de 0,3 à 42 mg équivalent d'acide gallique par gramme du mélange.

Le matériau polymère selon l'invention est préférentiellement issu de matières premières de recyclage, notamment de cutine, en particulier de cutine de tomate, et il est préférentiellement lui-même recyclable.

Une unité monomère de ce matériau polymère est de préférence un acide gras polyhydroxylé, en particulier dihydroxylé, par exemple l'acide 10,16-dihydroxyhexadécanoïque.

Un composé phénolique entrant dans sa constitution est de préférence l'acide p-coumarique et/ou la naringénine.

Ce matériau polymère peut répondre à l'une ou plusieurs des caractéristiques exposées ci-avant en référence au procédé de préparation d'un matériau polymère selon l'invention, pour tout ce qui concerne le matériau polymère en lui-même.

Dans des modes de réalisation particuliers de l'invention, le matériau polymère est tel que la température de fusion de ses phases cristallines, correspondant sensiblement à la température de recouvrance de forme du matériau polymère, est supérieure à 30 °C, de préférence comprise entre 30 et 70 °C, par exemple comprise entre 40 et 60 °C.

Une température de recouvrance de 37 °C s'avère particulièrement avantageuse pour une application du matériau polymère pour la fabrication de dispositifs médicaux destinés à être implantés dans le corps d'un individu humain.

Le matériau polymère selon l'invention présente un caractère élastoplastique aux températures inférieures à la température de fusion de ses phases cristallines, et un caractère hyperélastique aux températures supérieures à cette température de fusion. Le caractère élastoplastique présente de préférence un seuil de plasticité pour une déformation d'environ 20 % de déformation uniaxiale et une contrainte au seuil d'écoulement de 8 MPa.

Le matériau selon l'invention peut présenter un taux de cristallinité compris entre 20 et 50 %.

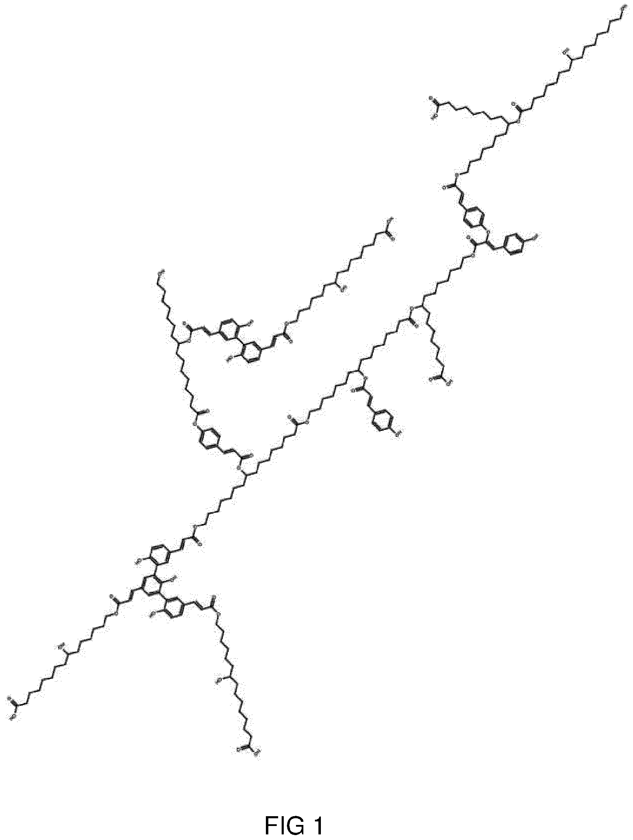

Un exemple de structure chimique d'un tel matériau polymère, correspondant au cas où il est constitué d'unités monomères constitutives acide 10,16-dihydroxyhexadécanoïque et acide p-coumarique, est montré sur la figure 1. Les propriétés d'élasticité et de mémoire de forme du matériau polymère selon l'invention peuvent être mises à profit pour la fabrication de produits divers, pour des applications dans des secteurs aussi variés que le secteur médical, le secteur automobile, le secteur aéronautique, etc.

Ainsi, un autre aspect de l'invention concerne l'utilisation d'un matériau polymère selon l'invention pour la fabrication d'un dispositif médical, notamment : un dispositif de type implantable, tel qu'un dispositif pour l'ingénierie des tissus, la suture, une endoprothèse vasculaire, etc., en particulier lorsque le matériau polymère présente une température de recouvrance de forme d'environ 37 °C ; ou encore un dispositif externe, tel qu'un pansement, une orthèse de contention, un matelas à mémoire de forme anti-escarres, etc.

Le matériau polymère selon l'invention peut également avantageusement être utilisé pour la fabrication :
- d'un enrobage de produit phytosanitaire, ou plus généralement d'une formulation galénique permettant une diffusion contrôlée des molécules actives, par exemple destinées au biocontrôle et/ou à la biostimulation des végétaux,
- d'un article d'emballage, notamment de produits cosmétiques,
- ou encore d'un équipement sportif au sein duquel il est souhaitable que certains composants puissent être conformés sur-mesure.

Le matériau polymère selon l'invention, de par le caractère réversible de sa propriété de mémoire de forme, peut également être utilisé pour la fabrication d'un actionneur, dans tout domaine industriel, par exemple d'un capteur de température.

Les caractéristiques et avantages de l'invention apparaîtront plus clairement à la lumière des exemples de mise en oeuvre ci-après, fournis à simple titre illustratif et nullement limitatifs de l'invention, avec l'appui des figures 1 à 15, dans lesquelles :
La figure 1 représente la structure chimique d'un matériau polymère conforme à l'invention, constitué d'unités monomères acide 10,16-dihydroxyhexadécanoïque et acide p-coumarique.

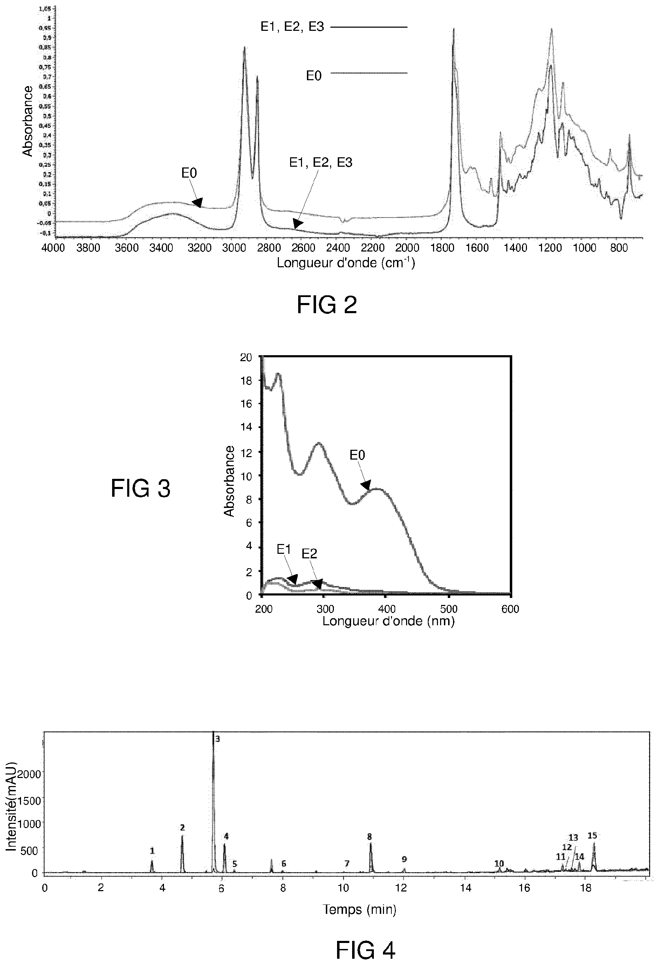

La figure 2 montre les spectres obtenus par spectroscopie infrarouge pour, respectivement, un extrait d'acides gras obtenu à partir de cutine de tomate avant purification (E0) et après purification visant à en éliminer partiellement les composés phénoliques (extraits comprenant une teneur en composés phénoliques conforme à l'invention E1 et E2, et extrait à teneur en composés phénoliques inférieure à la teneur préconisée par l'invention E3).
La figure 3 montre les spectres obtenus par spectroscopie UV-visible pour, respectivement, un extrait d'acides gras obtenu à partir de cutine de tomate avant purification (E0) et après purification visant à en éliminer partiellement les composés phénoliques (extraits comprenant une teneur en composés phénoliques conforme à l'invention E1 et E2).
La figure 4 montre les spectres obtenus par analyse par chromatographie en phase liquide couplée à la spectrométrie de masse en tandem (LC-MS-MS) de, respectivement, un extrait d'acides gras obtenu à partir de cutine de tomate avant purification (E0) et après purification visant à en éliminer partiellement les composés phénoliques (extrait comprenant une teneur en composés phénoliques conforme à l'invention E1).

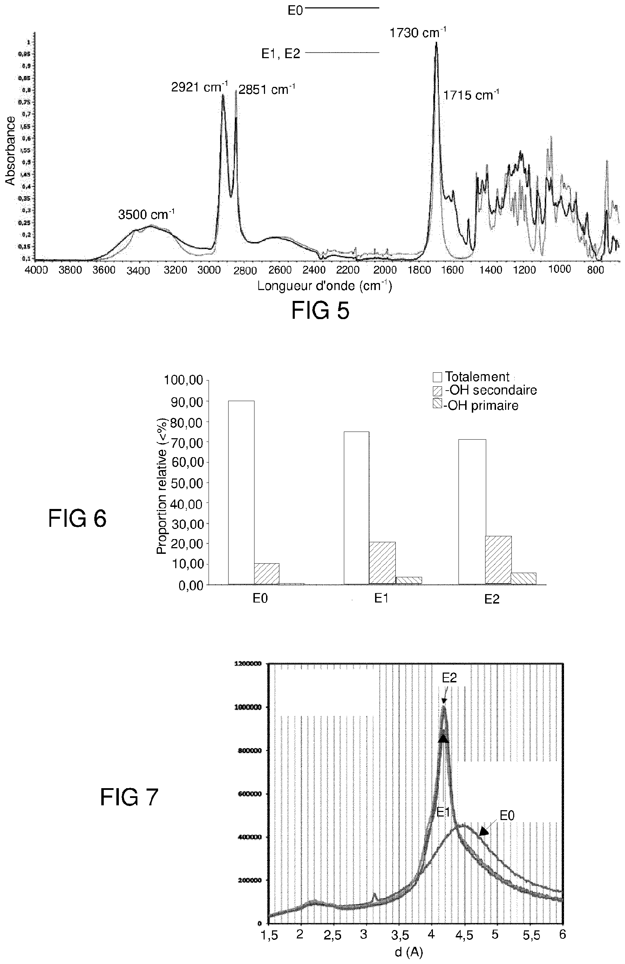

La figure 5 montre les spectres obtenus par spectroscopie infrarouge pour des matériaux polymères obtenus à partir, respectivement, d'un extrait d'acides gras obtenu à partir de cutine de tomate avant purification, et après purification visant à en éliminer partiellement les composés phénoliques (extraits comprenant une teneur en composés phénoliques conforme à l'invention).
La figure 6 représente un graphe en barres montrant, pour des matériaux polymères obtenus à partir respectivement d'un extrait d'acides gras obtenu à partir de cutine de tomate avant purification (E0) et après purification visant à en éliminer partiellement les composés phénoliques (extraits comprenant une teneur en composés phénoliques conforme à l'invention E1 et E2), les proportions relatives des fragments issus de l'acide 10,16-dihydroxyhexadécanoïque entièrement estérifiés (« Totalement »), estérifiés sur la fonction hydroxyle primaire seulement (« -OH primaire ») et estérifiés sur la fonction hydroxyle secondaire seulement (« -OH secondaire »).
La figure 7 montre des diffractogrammes obtenus par cristallographie aux rayons X pour des matériaux polymères obtenus à partir respectivement d'un extrait d'acides gras obtenu à partir de cutine de tomate avant purification (E0) et après purification visant à en éliminer partiellement les composés phénoliques (extraits comprenant une teneur en composés phénoliques conforme à l'invention E1 et E2).

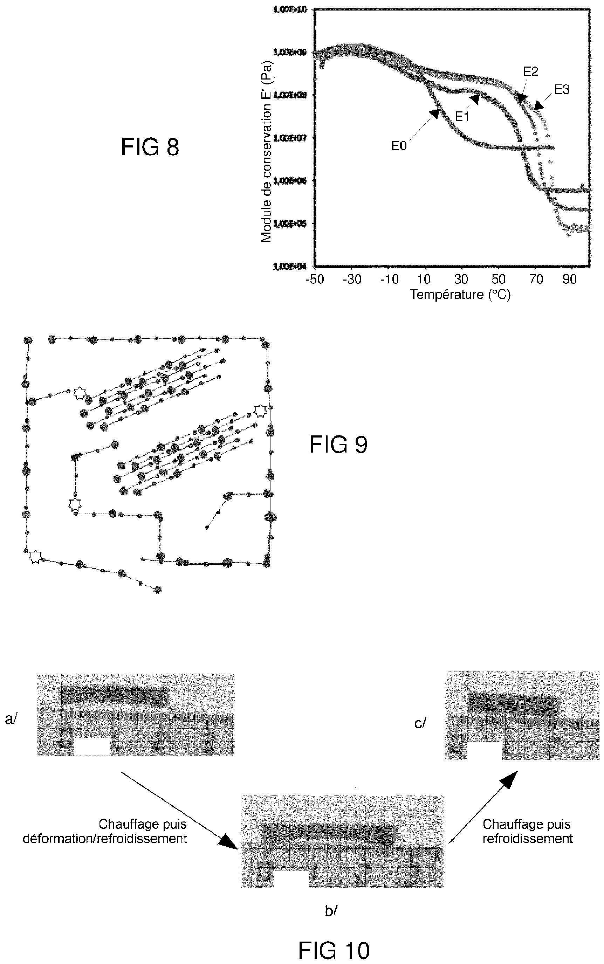

La figure 8 montre un graphe représentant le module de conservation E', mesuré par analyse mécanique dynamique, en fonction de la température, pour des matériaux polymères obtenus à partir respectivement d'un extrait d'acides gras obtenu à partir de cutine de tomate avant purification (E0) et après purification visant à en éliminer partiellement les composés phénoliques (extraits comprenant une teneur en composés phénoliques conforme à l'invention E1 et E2, et extrait à teneur en composés phénoliques inférieure à la teneur préconisée par l'invention E3).
La figure 9 montre une représentation structurale schématique d'un matériau polymère conforme à l'invention. Dans ce schéma, les gros points pleins représentent des unités monomères acides gras ω-hydroxylés, les petits points pleins représentent des groupements hydroxyle, les étoiles vides représentent des unités composés phénoliques, sous forme de monomères ou de dimères ou trimères.
La figure 10 montre des photographies d'un échantillon en matériau polymère conforme à l'invention, en a/ sous sa forme initiale permanente, en b/ sous sa forme temporaire après chauffage au-dessus de la température de fusion de ses phases cristallines, déformation uniaxiale et refroidissement, et en c/ à nouveau sous sa forme permanente après chauffage au-dessus de la température de fusion de ses phases cristallines et refroidissement sans contrainte.

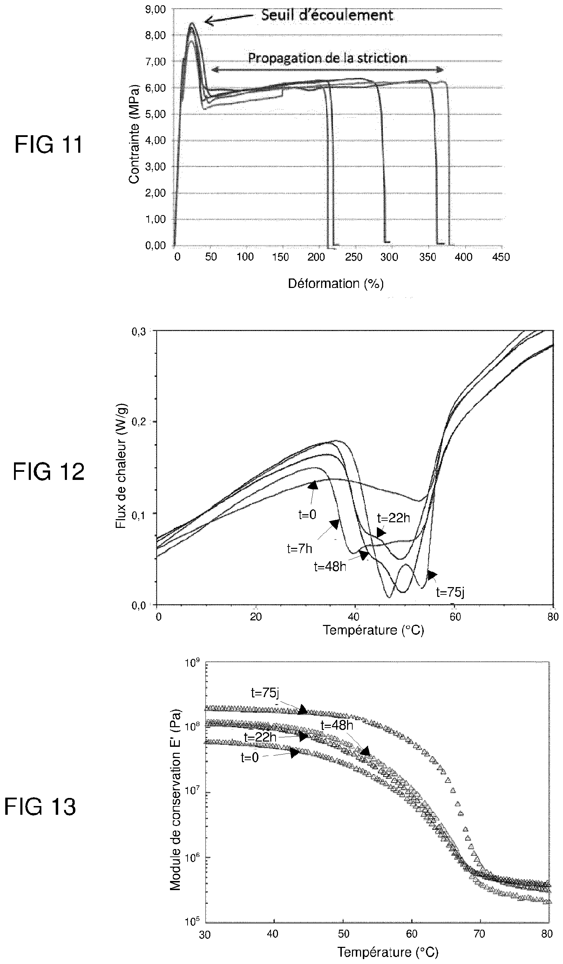

La figure 11 représente les courbes contrainte / déformation en tension à 20 °C pour différentes éprouvettes d'un matériau polymère conforme à l'invention.
La figure 12 montre un graphe représentant le flux de chaleur, mesuré par analyse enthalpique différentielle, en fonction de la température, pour différents temps de vieillissement (0h, 7h, 22h, 48h, 75j) d'un matériau polymère conforme à l'invention.
La figure 13 montre un graphe représentant le module de conservation, mesuré par analyse mécanique dynamique, en fonction de la température, pour un matériau polymère selon l'invention à différents temps de vieillissement (0h, 22h, 48h, 75j).

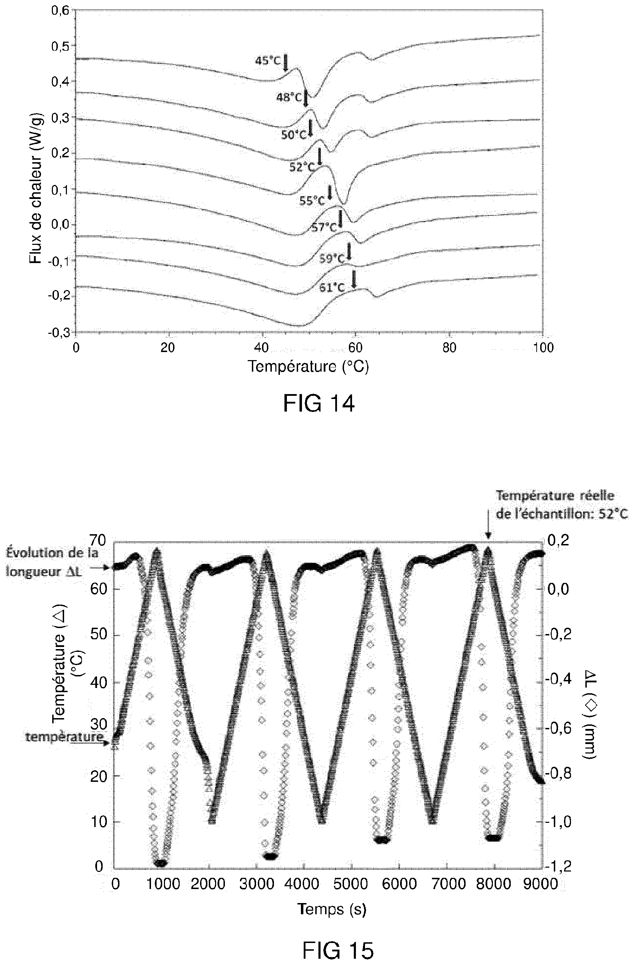

La figure 14 montre des thermogrammes obtenus par analyse par calorimétrie différentielle à balayage d'un matériau polymère conforme à l'invention après qu'il ait été soumis à un chauffage pendant 5 min respectivement à différentes températures comprises entre 45 °C et 61 °C.
La figure 15 montre un graphe obtenu par analyse mécanique dynamique réalisée sur un échantillon de matériau polymère conforme à l'invention après qu'il ait été initialement soumis à chauffage à une température supérieure aux températures de fusion de ses phases cristallines, sous étirement, puis à refroidissement sous ce même étirement, l'analyse mécanique dynamique comprenant l'exposition de l'échantillon du matériau polymère à une variation cyclique de température et la variation de la longueur (ΔL) de cet échantillon étant monitorée dans le temps.

### A/ Obtention d'un extrait de cutine de tomate E0

Un procédé d'extraction d'acides gras hydroxylés à partir de cutine de tomate est mis en oeuvre comme suit.

Des peaux de tomates sont isolées par décantation à partir de drèches de tomates. Ces peaux sont séchées, broyées et délipidées par reflux dans un extracteur de Soxhlet à l'aide d'un mélange acétone:éthanol (1:1) pendant 2 jours. Elles sont ensuite déshydratées.

200 g de peaux de tomate ainsi préalablement décirées et déshydratées sont mis en suspension dans 1 l d'une solution d'hydroxyde de potassium KOH à 5 % préparée dans l'éthanol anhydre. Le mélange est chauffé à 50°C pendant 16 h. La suspension est ensuite filtrée sous vide par passage à travers un fritté de taille A0 (160-250 µm), le volume d'éthanol est réduit par évaporation, puis le filtrat est dilué par de l'eau et acidifié jusqu'à pH 3-4 à l'aide d'une solution d'acide chlorhydrique HCl à 37 %. La suspension ainsi formée est centrifugée à 8000 tr/min pendant 15 min à 20°C, puis le culot de centrifugation est récupéré, lavé à l'eau puis séché sous vide. 150 g d'un extrait huileux constitué principalement d'acides gras (pour plus de 85 % en poids sont ainsi obtenus.

Cet extrait, de couleur rouge brun, est nommé dans la présente « E0 ».

### B/ Caractérisation de l'extrait de cutine de tomate E0

La pureté des monomères extraits des drêches de tomate est évaluée en réalisant un partage de phase dans le chloroforme-méthanol-eau (8/4/3, v/v) ; la phase inférieure contenant les acides gras (et les colorants) est récoltée, évaporée et pesée. Cette méthode donne une pureté globale intégrant les teneurs en eau résiduelle, en protéines et en polysaccharides. La teneur en molécules hydrophobes (acides gras et composés phénoliques) est de 97,3 ± 0,9%.

### B.1/ Analyse de la composition en acides gras de l'extrait

Une analyse de l'extrait E0 par chromatographie en phase gazeuse couplée à la spectrométrie de masse GC-MS/FID, par rapport à une gamme étalon externe de C17, montre que la fraction d'acides gras de cet extrait huileux comporte une teneur en acides gras ω-hydroxylés de plus de 90 %. La composition centésimale massique de la fraction des acides gras de cet extrait huileux ainsi obtenue est indiquée dans le tableau 1 ci-après.

**Tableau 1**

| Constituant | Teneur dans l'extrait (%) |
|---|---|
| Acide hexadécanoïque | 2,04 |
| Acide linoléique | 0,46 |
| Acide oléique | 0,28 |
| Acide stéarique | 0,05 |
| Acide 16-hydroxyhexadécanoïque | 3,6 |
| Acide 1,16-hexadécanedioïque | 0,61 |
| Acide 10,16-dihydroxyhexadécanoïque | 89,66 |
| Acide hydroxyhexadécan-1,16-dioïque | 2,12 |
| Acide dihydroxyoctanoïque | 0,28 |

L'acide 10,16-dihydroxyhexadécanoïque est le constituant largement majoritaire de cet extrait huileux, dont il représente quasiment 90 % du poids de la fraction majoritaire.

### B.2/ Analyse de la composition en composés phénoliques de l'extrait

La composition en composés phénoliques totaux de l'extrait E0 est déterminée par spectrophotométrie en utilisant l'acide gallique en tant qu'étalon et la méthode décrite dans la publication de Cabone et al., 2011, Food Chem, 127, 493-500*.* L'échantillon de monomères de cutine de tomates est dissous dans l'EtOH/H₂O (70 :30) à une concentration de 5 g/L. Après ajout de 1 mL d'eau, puis, 1 mL du réactif de Folin-Ciocalteu (9001.0100, Merck) la réaction a lieu pendant 3 - 5 minutes. Après ajout d'une solution de Na₂CO₃ (1.06398.1000, Merck) à 10% et d'eau qsp 20 mL, les échantillons sont incubés durant 1 h 30 à température ambiante à l'abri de la lumière. L'absorbance est lue à 760 nm au spectrophotomètre (Shimadzu, UV-1800) contre un blanc (substitution de l'échantillon par de l'eau osmosée dans la préparation du tube). La composition en composés phénoliques totaux est exprimée en mg/g (équivalents acide gallique par gramme d'acide gras). Le résultat est calculé via une courbe d'étalonnage de l'acide gallique faite entre les concentrations 0,015 g/L et 0,0015 g/L.

On détermine ainsi une quantité de composés phénoliques totaux égale à 44,622 +/- 2,23 mg équivalent d'acide gallique par g d'extrait, ce qui équivaut à 4,5 % en poids par rapport au poids total de l'extrait.

### C/ Purification de l'extrait de cutine de tomate E0

La purification de l'extrait E0 est réalisée par chromatographie d'adsorption sur colonne de silice amino-propyle. Une colonne de verre (5 × 45 cm terminée à sa base successivement par un fritté et un robinet) est remplie avec 100g de silice amino-propyle dispersée dans 300 mL de chloroforme-isopropanol 2:1 (v:v).

### Protocole 1

11 g de l'extrait E0 dilués dans 150 mL de mélange chloroforme-isopropanol 2:1 (v:v) sont déposé sur la colonne. Après adsorption des acides gras, une première élution est réalisée avec 1 L de ce solvant. Les acides gras sont ensuite élués par 1,5 L d'un mélange CHCl₃-acide acétique glacial 98:2 (v:v). Après évaporation des solvants sous vide, on obtient un extrait purifié de couleur jaune, nommé E1.

### Protocole 2

Le protocole 1 est appliqué, à la différence que lors de la seconde élution on élimine les 200 premiers millilitres ; le reste de l'élution (1,3 L) est récolté et évaporé sous vide pour obtenir un extrait putrifié de couleur jaune très pâle, nommé E2, dont le degré de purification est supérieur à celui de E1.

Une autre alternative pour obtenir l'extrait E2 consiste à recristalliser les acides gras contenus dans l'extrait E1 dans le chloroforme à -20 °C. Pour cela, 5 g d'extrait E1 sont dissous dans le chloroforme à la température de 55 °C, puis placés à -20°C pendant 12 h. Les acides gras précipités (cristallisés) sont ensuite filtrés sur un entonnoir Büchner recouvert de papier Joseph et lavés avec du chloroforme à -20 °C. L'extrait obtenu est ensuite séché sous hotte à température ambiante.

### Protocole 3

L'extrait E1 obtenu selon le protocole 1 est soumis à une étape supplémentaire de chromatographie sur gel de silice amino-propyle réalisée selon les mêmes conditions que décrit dans le protocole 2, aux différences que : i) la charge de la colonne en extrait E1 est de 8 g pour 100 g de silice amino-propyle ; ii) on élimine les 150 premiers mL de la seconde élution par le chloroforme-acide acétique glacial 98:2 (v:v).

On obtient un extrait putrifié de couleur blanche, nommé E3, dont le degré de purification est supérieur à ceux de E1 et E2.

Une autre alternative pour obtenir l'extrait E3 est de réaliser une triple recristallisation de l'extrait E1 dans le chloroforme à -20 °C.

### D/ Caractérisation des extraits partiellement purifiés E1, E2 et E3

### D.1/ Analyse de la composition en composés phénoliques des extraits

La teneur en composés phénoliques résiduels est estimée selon la méthode décrite ci-avant en partie B.2/ en utilisant des gammes étalon d'acide gallique. On obtient les valeurs suivantes :
- extrait E1 : 7,525 +/- 0,28 mg équivalent d'acide gallique par g d'extrait, ce qui équivaut à environ 0,7 % en poids par rapport au poids total de l'extrait ;
- extrait E3 : 0,221 +/- 0,63 mg équivalent d'acide gallique par g d'extrait, ce qui équivaut à environ 0,02 % en poids par rapport au poids total de l'extrait.

Les extraits E1 et E2 présentent une teneur en composés phénoliques conforme à la présente invention, et peuvent être mis en oeuvre tels quels dans un procédé de préparation d'un matériau polymère selon l'invention. L'extrait E3 présente une teneur totale en composés phénoliques inférieure à la teneur préconisée par la présente invention.

### D.2/ Analyse par spectroscopie infrarouge à transformée de Fourier

L'analyse FTIR (30 scans) est réalisée à une résolution 4 cm⁻¹ sur un spectromètre Nicolet Magna IR 550 équipé d'un détecteur tellurure de mercure-cadmium et sous balayage d'air sec. L'acquisition des spectres est réalisée en mode ATR sur un cristal de diamant avec une angle d'incidence de 45°. Tous les spectres sont acquis entre 4000 et 700 cm⁻¹.

L'extrait non purifié E0, et les extraits à différents niveaux de purification E1, E2 et E3 sont analysés par spectroscopie infrarouge. Les spectres obtenus sont montrés sur la figure 2. On observe y bien, pour chacun des 4 extraits, un spectre typique des acides gras. En outre, pour les extraits purifiés E1, E2 et E3, on observe la disparition progressive des bandes à 2970, 1628, 1605, 1550, 1512, 835 cm⁻¹, indiquées par des flèches sur la figure, qui sont présentes pour l'extrait non purifié E0. Cette disparition témoigne de la disparition de motifs phénoliques lors de la purification.

### D.3/ Analyse par spectroscopie UV-visible

Afin de déterminer l'impact du procédé de purification sur la composition en composés phénoliques des extraits, un profil UV a été mesuré de 200 à 600 nm à une concentration de 0,1 g/L en extraits dans l'éthanol à 96%.

La spectroscopie UV-Visible réalisée sur les extraits E0, E1 et E2 montre la présence d'espèces absorbant à 380, 288 et 225 nm, comme observé sur la figure 3. De plus, elle témoigne de l'élimination de composés absorbants dans l'UV-Visible, c'est-à-dire de composés phénoliques, au cours de la purification de l'extrait E0.

### D.4/ Identification des composés phénoliques

La recherche de composés phénoliques est effectuée par chromatographie en phase liquide couplée à la spectrométrie de masse en tandem (LC-MS-MS), pour l'extrait non purifié E0 et l'extrait partiellement purifié E1.

A cet effet, les échantillons sont solubilisés dans un mélange MeOH/H₂O/HCOOH (80/20/0,1, v/v/v) et analysés sur une colonne C18 et détection UV à 280 nm (détection des polyphénols), 330 nm (détection des acides hydroxycinnamiques) et 360 nm (détection des flavanols).

Les résultats obtenus sont montrés sur la figure 4.

Les différents pics sont identifiés comme indiqué dans le tableau 2 ci-dessous.

**Tableau 2**

| Pic | Temps de rétention (min) | Composé |
|---|---|---|
| 1 | 3,7 | Acide 2-hydroxybenzoïque |
| 2 | 4,7 | Acide benzoïque |
| 3 | 5,8 | Acide p-coumarique |
| 4 | 6,1 | Acide cis-p-coumarique |
| 5 | 6,4 | Acide férulique |
| 6 | 8 | Forme quinone de l'acide coumarique |
| 7 | 10,4 | Myricétine |
| 8 | 10,9 | Naringénine |
| 9 | 12 | Acide 2-méthylcoumarique |
| 10 | 15,2 | Déoxyhexose myricétine |
| 11 | 17,2 | Quercétine rhamnoside |
| 12 | 17,3 | Quercétine 3-O-(6"-malonyl-glucoside) 7-O-glucoside |
| 13 | 17,6 | Quercétine déoxyhexose |
| 14 | 17,8 | Déoxyhexosyl-dihydrokaempferol |
| 15 | 18,1 | Quercétine 3-O-(6"-malonyl-glucoside) 7-O-glucoside |

Entre les deux extraits E0 et E1, on observe des différences quantitatives, mais la composition en composés phénoliques est globalement comparable.

Deux composés ne sont cependant pas retrouvés dans l'extrait E1 : le déoxyhexose myricétine (pic 10, temps de rétention 15,2 min), et la forme quinone de l'acide coumarique (pic 6, temps de rétention 8 min). Un des isomères de la quercétine 3-O-(6"-malonyl-glucoside) 7-O-glucoside (pic 15, temps de rétention 18,1 min) est en outre présent en très petite quantité dans l'extrait E1.

### E/ Formation de matériaux polymères à partir des extraits E0, E1, E2 et E3

Pour chaque extrait le protocole ci-dessous est appliqué.

La quantité souhaitée d'extrait est introduite dans un moule en inox, de dimensions 4x4 cm, recouvert de téflon. L'ensemble est préchauffé dans une étuve (Thermo Scientific FB65500) à 60°C pendant 5 min.

Aucun composé, en particulier aucun catalyseur ni solvant, n'est introduit dans le milieu réactionnel, qui est constitué uniquement de l'extrait.

Le moule contenant ce milieu réactionnel ainsi formé est introduit dans une étuve à 60°C, et le milieu réactionnel est homogénéisé par agitation manuelle au moyen d'une spatule pendant 5 min. Un agent desséchant (oxyde de phosphore P₂O₅) est également introduit dans l'étuve.

Il est ensuite appliqué dans l'étuve une température de 150 °C, et une pression de 400 mbar, pendant une phase initiale d'une durée de 90 min. Il se produit dans le milieu réactionnel la copolymérisation des acides gras et des composés phénoliques contenus dans l'extrait, ainsi qu'un début de réticulation du polymère ainsi formé.

La pression dans l'étuve est ramenée à pression atmosphérique à l'issue de cette phase initiale.

Le chauffage est ensuite poursuivi, durant la deuxième phase de l'étape de chauffage, pendant 22 h à 150°C, à pression atmosphérique, pour poursuivre la réticulation du polymère.

A l'issue de cette étape de chauffage, le moule est ôté de l'étuve et refroidi dans un bain de glace.

Pour les extraits E0, E1 et E2 on en retire un matériau polymère solide doté de propriétés de déformation élastique.

Pour l'extrait E3, on n'obtient pas de matériau polyester réticulé.

### F/ Caractérisation des matériaux polymères

### F.1/ Détermination du temps de gel

Au cours de cette phase initiale, le suivi du comportement rhéologique des extraits en fonction du temps en conditions isothermes à 150 °C permet de mettre en évidence la gélification du matériau polymère après un certain temps de réaction. A cet effet, un rhéomètre rotationnel avec une géométrie plan-plan (diamètre 20 mm, entrefer de 0,5 mm) est utilisé en mode dynamique (fréquence de 1 hz, déformation de 0,1%). Au début de l'isotherme à 150 °C, le module de perte G" mesuré est supérieur au module de conservation G', du fait du comportement liquide des acides gras. Au cours de la réaction isotherme, les deux modules augmentent, puis le module G' devient supérieur au module G", indiquant la formation d'un solide par gélification. En première approximation, le temps de gel peut être estimé par le temps au point de croisement des modules G'=G".

On obtient les temps de gel suivants : 2h15 pour l'extrait E0, 7h30 pour l'extrait E1, 8h50 pour l'extrait E2. Ceci démontre la formation d'un réseau tridimensionnel au sein des matériaux polymères obtenus à partir de ces extraits.

### F.2/ Degré de réticulation et architecture des matériaux polymères

Les matériaux polymères obtenus à partir de chacun des extraits E0, E1 et E2 sont analysés par spectroscopie infrarouge, comme indiqué ci-avant pour ces extraits.

Les spectres obtenus sont montrés sur la figure 5. Sur tous les spectres, la présence d'une bande caractéristique d'un carbonyle à 1730 cm⁻¹ et l'absence de bande caractéristique d'un acide à 1705 cm⁻¹ témoignent de la formation d'un polyester pour tous les extraits, les composés phénoliques étant liés aux acides gras par des liaisons ester.

Afin de déterminer l'architecture du matériau polymère, il est appliqué, pour chacun des matériaux polymères obtenus à partir des extraits E0, E1 et E2, la méthode décrite dans la publication de Philippe et al., Plant physiology, 2016, 170, 807-820. A cet effet, 5 mg de matériau polymère sont mélangés dans un tube en verre bouché pendant 24 h avec 50 mg de 2-benzyloxy-1-methylpyridinium triflate (Sigma-Aldrich) et 6 mg d'oxyde de magnésium dans 1 ml de tri-fluorotoluène à 90 °C. Le matériau polymère est ensuite rincé au dichlorométhane et séché. Le matériau polymère marqué est ensuite dépolymérisé à l'aide de méthanolate de sodium à 0,5 M. Cette dépolymérisation est effectuée pendant 16 h à 60 °C. Un aliquote de cette fraction est prélevé et injecté en chromatographie en phase gazeuse couplée à la spectrométrie de masse (GC-MS) après silylation. On détermine ainsi, pour chaque matériau polymère obtenu, les proportions en poids relatives des fragments correspondant à : l'acide 10,16-dihydroxyhexadécanoïque estérifié au niveau de ses deux fonctions hydroxyle ; l'acide 10,16-dihydroxyhexadécanoïque estérifié au niveau de sa fonction hydroxyle secondaire seulement ; l'acide 10,16-dihydroxyhexadécanoïque estérifié au niveau de sa fonction hydroxyle primaire seulement.

Les résultats obtenus sont montrés sur la figure 6. On observe que la purification impacte le schéma de réticulation du polymère : plus les acides gras ont été purifiés avant la polymérisation, moins le matériau polymère produit est réticulé, le nombre de groupements hydroxyle libres des acides gras dans le polyester augmentant avec le degré de purification des extraits.

### F.3/ Organisation cristalline des matériaux polymères

Une analyse par cristallographie aux rayons X (DRX) est réalisée sur les matériaux polymères obtenus à partir des extraits E0, E1 et E2, à 25 °C, au moyen d'un diffractomètre à rayons X Bruker D8 équipé d'un détecteur Vantée 500. Le rayonnement X, Cu Kα1 (=0,15406 nm), produit dans un tube de cuivre scellé à 40 kV et 40 mA, est sélectionné et parallélisé à l'aide de miroirs de Goebel. La distance entre l'échantillon et le détecteur est de 10 cm et les angles de Bragg de 3 à 70 (°2θ).

Les diffractogrammes obtenus sont montrés sur la figure 7. On y observe que, contrairement aux matériaux polymères produits à partir de l'extrait non purifié E0, les matériaux obtenus à partir des extraits purifiés E1 et E2 présentent un pic unique, qui indique un caractère cristallin. Ce pic, à 4,15-4,2 Å, est typique d'une organisation en phase hexagonale pour les chaines d'acides gras.

### F.4/ Propriétés thermomécaniques

Une analyse mécanique dynamique des matériaux polymères obtenus à partir des extraits E0, E1, E2 et E3 est réalisée par analyse mécanique dynamique (DMA), au moyen d'un dispositif Rheometric Scientific MK3E permettant de mesurer le module de conservation en fonction de la température. Des échantillons de chaque matériau polymère d'épaisseur 1 mm, hauteur 15 mm, largeur 4 mm, sont analysés de -50 °C à 100 °C, avec une vitesse de montée en température de 3 °C/min, avec une fréquence d'oscillation de 1 Hz, une déformation de 0,1 % et une précharge de 0,5 N.

Les résultats obtenus sont montrés sur la figure 8, qui montre que ces matériaux présentent des chutes de modules de conservation correspondant à la fusion des cristaux, le degré de purification des extraits modulant la température de fusion des matériaux. Ainsi, plus les extraits sont purifiés, et contiennent moins de composés phénoliques, plus la température de fusion des matériaux polymères qui en sont issus est élevée. De plus, le module de conservation au plateau caoutchoutique, vers 90°C, varie également avec le degré de pureté des extraits : plus les extraits sont purifiés, plus les matériaux polymères formés ont un module de conservation faible au plateau caoutchoutique.

Les résultats obtenus permettent de proposer, pour les matériaux polymères obtenus à partir des extraits partiellement purifiés E1 et E2, le schéma structural montré sur la figure 9, correspondant à une structure semi-cristalline comprenant des empilements de phases cristallines de type hexagonal (empilements de polyesters linéaires). Un tel schéma n'est pas applicable aux matériaux polymères obtenus à partir des extraits E0 et E3 comprenant respectivement une quantité trop importante, ou insuffisante, de motifs phénoliques, et de ce fait dénués, respectivement, du taux de cristallinité ou du comportement élastomérique nécessaires à l'obtention des propriétés de mémoire de forme.

### G/ Etude du comportement thermomécanique des matériaux polymères à différentes températures

### G.1/ Expérience 1 - déformation à une température supérieure à la température de fusion de la phase cristalline du matériau

Un échantillon de matériau polymère E1, sous forme d'une baguette de section carrée ( 4×1 mm²) et de longueur 2 cm est mis en oeuvre.

La température de fusion de ses phases cristallines est mesurée par analyse enthalpique différentielle (AED, ou DSC pour l'anglais Differential Scanning Calorimetry), comprenant un balayage en température d'un échantillon de matériau polymère, d'une température de -50 °C jusqu'à une température de 80 °C avec une rampe de montée en température de 3 °C/min. Ce balayage est suivi d'une descente de température à 3 °C/min puis d'un second balayage en montée, dans les mêmes conditions. Cette analyse est réalisée sur une quantité de matériau polymère de 2 mg, placée dans une capsule hermétique en aluminium.

On détermine ainsi une température de fusion comprise entre 40 et 50 °C.

Cet échantillon est soumis aux opérations suivantes. L'échantillon est montré à chaque étape sur la figure 10.

Sur cette figure, on voit en a/ l'échantillon dans sa forme permanente. Il est ensuite plongé dans de l'eau à une température supérieure à 60 °C pendant 5 secondes, puis retiré du bain et étiré lors de son refroidissement. Il présente alors une forme allongée par rapport à son état initial, montrée en b/ sur la figure, cette forme temporaire étant durablement fixée. L'échantillon est ensuite à nouveau plongé dans de l'eau à température supérieure à 60 °C, puis retiré du bain, sans qu'aucune contrainte soit exercée sur lui. On observe alors, comme montré en c/ sur la figure, qu'il a retrouvé sa forme permanente initiale. Ce comportement est caractéristique des matériaux à mémoire de forme. Le même comportement est observé pour le matériau polymère obtenu à partir de l'extrait partiellement purifié E2.

Ce comportement n'est par contre pas retrouvé pour les matériaux polymères obtenus à partir des extraits non purifié E0, et totalement purifié E3. L'échantillon obtenu à partir de E0 reprend immédiatement sa forme après avoir été plongé dans l'eau puis étiré lors de son refroidissement, et ce quelle que soit la température de l'eau. L'échantillon obtenu à partir de E3, une fois déformé, ne reprend jamais sa forme initiale, quelle que soit la température à laquelle il est ensuite soumis.

### G.2/ Expérience 2 - déformation à une température inférieure à la température de fusion de la phase cristalline du matériau

Le matériau polymère E2 est mis en oeuvre. La température de fusion de ses phases cristallines, mesurée par analyse enthalpique différentielle comme décrit ci-avant, est comprise entre 40 et 50 °C.

Différentes éprouvettes de ce matériau sont soumises à un essai de traction à 20 °C sur un appareil MTS Synergie 100 (MTS Systems Corporation). Les essais sont conduits à une vitesse de 10 mm/min.

On observe que, à la température de mesure de 20 °C, qui est inférieure à la température de fusion des phases cristallines du matériau polymère, pour des déformations inférieures à environ 20 %, le comportement du matériau est de type élastique. La contrainte augmente linéairement avec la déformation jusqu'à atteindre un seuil d'écoulement à 8 MPa pour environ 20 % de déformation uniaxiale. Au-delà de 20 % de déformation uniaxiale, le comportement du matériau devient plastique, un phénomène de striction est observé et la déformation devient permanente. Pour programmer le matériau polymère selon l'invention, il est donc nécessaire de le déformer au minimum de 20 % pour obtenir une déformation plastique.

Le matériau polymère selon l'invention présente donc une capacité de mémoire de forme : déformé plastiquement à froid pour atteindre une forme temporaire programmée, puis chauffé, il retrouve sa forme initiale. Le même comportement est observé pour le matériau polymère obtenu à partir de l'extrait partiellement purifié E1. Ce comportement n'est pas retrouvé pour les matériaux polymères obtenus à partir des extraits non purifié E0, et totalement purifié E3.

### H/ Etude du vieillissement sur les propriétés thermiques d'un matériau polymère selon l'invention

L'effet du vieillissement sur les propriétés thermiques du matériau polymère obtenu à partir de l'extrait E1 est mesuré par analyse enthalpique différentielle (AED, ou DSC pour l'anglais Differential Scanning Calorimetry), comprenant un balayage en température d'un échantillon de matériau polymère, d'une température de -50 °C jusqu'à une température de 80 °C avec une rampe de montée en température de 3 °C/min. Ce balayage est suivi d'une descente de température à 3°C/min puis d'un second balayage en montée, dans les mêmes conditions. Cette analyse est de préférence réalisée sur une quantité de matériau polymère de l'ordre de 2 mg, placée dans une capsule hermétique en aluminium. L'effet du vieillissement est annulé au cours de la première chauffe à 80°C. Le thermogramme obtenu au cours du second chauffage correspond au comportement du matériau polymère sans effet de vieillissement ou « rajeuni ». Le même échantillon est utilisé pour l'analyse à différents temps de vieillissement dont le temps 0 est celui de l'analyse précédente.

Les courbes obtenues pour des temps de vieillissement de 0 h, 7 h, 22 h, 48 h et 75 jours, sont montrées sur la figure 12. On y observe que la température de début de fusion, dite Tₒₙₛₑₜ, déterminée à l'intersection de la ligne de base et de la chute du signal en début de pic, augmente de 34,7°C pour 22 h de vieillissement à 39,5°C pour 75 jours. L'enthalpie de fusion augmente quant à elle de 21 à 51 Joule/gramme lorsque le temps de vieillissement augmente de 0 à 75 jours, ce qui signifie que le matériau polymère cristallise au cours de temps.

L'effet du vieillissement sur les propriétés mécaniques du matériau polymère est étudié par analyse mécanique dynamique (DMA), au moyen d'un dispositif Rheometric Scientific MK3E. Des échantillons d'épaisseur 1 mm, hauteur 15 mm, largeur 4 mm, sont analysés de 30 °C à 80 °C, avec une vitesse de montée en température de 3 °C/min, avec une fréquence d'oscillation de 1 Hz, une déformation de 0,1% et une précharge de 0,5 N. Le module de conservation E' est mesuré sur le même échantillon à différents temps de vieillissement. On observe notamment sur la figure 13 que le module de conservation à 30°C augmente de 59 à 193 MPa lorsque l'échantillon de matériau polymère vieillit de 0 à 75 jours.

### I/ Mise en évidence de la réversibilité de la propriété de mémoire de forme d'un matériau polymère selon l'invention

Des échantillons du matériau polymère obtenu à partir de l'extrait E2 sont tout d'abord soumis à une analyse par DSC, après traitement thermique pendant 5 min respectivement à différentes températures comprises entre 45 °C et 61 °C (plus précisément à 45 °C, 48 °C, 50 °C, 52 °C, 55 °C, 57 °C, 59 °C et 61 °C). Les thermogrammes obtenus sont montrés sur la figure 14.

On détermine que les deux pics de fusion des deux formes cristallines de ce matériau polymère sont les mieux séparés pour la température de chauffage de 52 °C, qui est ainsi fixée comme température de déclenchement de la réversibilité de forme.

La relaxation mécanique en fonction de la température du matériau polymère est déterminée par analyse mécanique dynamique (DMA), au moyen d'un dispositif Rheometric Scientific MK3E permettant également de mesurer le module de conservation au plateau caoutchoutique.

Un échantillon du matériau polymère d'épaisseur de l'ordre de 0,5 à 1 mm, hauteur 10 mm, largeur 4 mm, est étiré manuellement de 90 % (19 mm de longueur finale) à 70 °C (température supérieure aux températures de fusion des formes cristallines du matériau polymère, pour laquelle, sur les thermogrammes obtenus par DSC, la courbe de flux de chaleur est revenue au niveau basal), puis refroidi sous cette même contrainte. La contrainte est ensuite relâchée lorsque l'échantillon est à température ambiante. L'échantillon est ensuite placé dans le dispositif d'analyse et les variations de sa longueur (ainsi que les modules) sont mesurées lorsqu'il est soumis à une variation cyclique de température entre 10 °C et 68 °C (vitesse de consigne, correspondant à une température réelle de l'échantillon de 52 °C), avec une vitesse de montée ou de descente en température de 3 °C/min, une fréquence d'oscillation de 1 Hz, une déformation de 0,1% et une précharge de 0,5 N.

Les résultats obtenus sont montrés sur la figure 15. La réversibilité de forme de l'échantillon en fonction de la température y apparait clairement, pour chacun des cycles de chauffage appliqués.

## Revendications

1. Procédé de préparation d'un matériau polymère de type polyester, **caractérisé en ce qu'**il comprend, successivement, des étapes de :
- préparation d'un milieu réactionnel comprenant un mélange de :
• au moins un monomère choisi parmi les acides gras ω-hydroxylés et les esters d'un acide gras ω-hydroxylé et d'un alcool à chaine aliphatique linéaire ou ramifiée, saturée ou insaturée, éventuellement substituée, ladite chaine aliphatique comportant de 1 à 18 atomes de carbone ;
• et au moins un composé phénolique, la teneur totale en composé(s) phénolique(s), déterminée par dosage spectrophotométrique après réaction avec le réactif de Folin-Ciocalteu, par rapport à une gamme étalon d'acide gallique, étant comprise dans une plage de valeurs de 0,3 à 42 mg équivalent d'acide gallique par gramme dudit mélange,
- et chauffage dudit milieu réactionnel pour réaliser la polymérisation dudit monomère et dudit composé phénolique et la réticulation du polymère ainsi formé.

2. Procédé selon la revendication 1, selon lequel ledit milieu réactionnel est exempt de catalyseur.

3. Procédé selon l'une quelconque des revendications 1 à 2, selon lequel au moins une phase initiale de l'étape de chauffage est réalisée sous pression réduite.

4. Procédé selon la revendication 3, selon lequel au moins une phase initiale de l'étape de chauffage est réalisée à une pression comprise entre 0 et 900 mbar, de préférence comprise entre 400 et 800 mbar.

5. Procédé selon l'une quelconque des revendications 1 à 4, selon lequel ladite étape de chauffage est réalisée dans un intervalle de température compris entre 120 et 200°C, pendant une durée d'au moins 4 heures.

6. Procédé selon l'une quelconque des revendications 1 à 5, selon lequel ledit mélange contient au moins un composé phénolique choisi parmi les acides hydroxybenzoïques, les acides hydroxycinnamiques et les flavonoïdes, ou une combinaison quelconque de tels composés phénoliques.

7. Procédé selon l'une quelconque des revendications 1 à 6, selon lequel ledit mélange contient au moins de l'acide p-coumarique et/ou de la naringénine.

8. Procédé selon l'une quelconque des revendications 1 à 7, selon lequel ledit monomère est un acide gras dihydroxylé ou un ester d'un acide gras dihydroxylé et d'un alcool à chaine aliphatique linéaire ou ramifiée, saturée ou insaturée, éventuellement substituée, comportant de 1 à 18 atomes de carbone, de préférence l'acide 10,16-dihydroxyhexadécanoïque ou son ester méthylique ou éthylique.

9. Procédé selon l'une quelconque des revendications 1 à 8, selon lequel ledit mélange est obtenu par dépolymérisation de cutine, de préférence de cutine de tomate, récupération de l'extrait de monomères obtenu et purification dudit extrait pour éliminer partiellement les composés phénoliques contenus dans ledit extrait, de sorte à obtenir une teneur en composés phénoliques comprise dans ladite plage de valeurs.

10. Matériau polymère de type polyester obtenu par un procédé selon l'une quelconque des revendications 1 à 9, comprenant en tant qu'unités monomères constitutives au moins un acide gras ω-hydroxylé et au moins un composé phénolique, présentant une structure semi-cristalline comprenant des empilements de phases cristallines de type hexagonal, et contenant une quantité de 0,03 à 4,2 % en poids d'unités composé(s) phénolique(s), par rapport au poids total dudit matériau polymère, cette quantité étant déterminée par dosage de la teneur totale en composé(s) phénolique(s) dans le mélange mis en oeuvre pour la préparation dudit matériau polymère, par dosage spectrophotométrique après réaction avec le réactif de Folin-Ciocalteu, par rapport à une gamme étalon d'acide gallique, cette teneur totale étant comprise dans une plage de valeur de 0,3 à 42 mg équivalent d'acide gallique par gramme du mélange.

11. Matériau polymère selon la revendication 10, dans lequel la température de fusion desdites phases cristallines est supérieure à 30 °C, de préférence comprise entre 30 et 70 °C, la température de fusion des phases cristallines étant déterminée par la méthode divulguée dans la description.

12. Utilisation d'un matériau polymère selon l'une des revendications 10 ou 11 pour la fabrication d'un dispositif médical, d'un enrobage de produit phytosanitaire, d'un article d'emballage ou d'un équipement sportif.

## Patentansprüche

1. Verfahren zum Herstellen eines Polymermaterials vom Typ Polyester, **dadurch gekennzeichnet, dass** es nacheinander die folgenden Schritte umfasst:
- Herstellen eines Reaktionsmediums, das eine Mischung aus Folgendem umfasst:
• mindestens einem Monomer, das aus ω-hydroxylierten Fettsäuren oder Estern einer w-hydroxylierten Fettsäure und eines Alkohols mit einer linearen oder verzweigten, gesättigten oder ungesättigten, gegebenenfalls substituierten aliphatischen Kette, wobei die aliphatische Kette 1 bis 18 Kohlenstoffatome umfasst, ausgewählt ist;
• und mindestens einer phenolischen Verbindung, wobei der Gesamtgehalt an phenolischer Verbindung(en), bestimmt durch spektrophotometrische Bestimmung nach der Reaktion mit dem Folin-Ciocalteu-Reagenz, bezogen auf eine Standardreihe von Gallussäure in einem Wertebereich von 0,3 bis 42 mg Gallussäureäquivalent pro Gramm der Mischung liegt,
- und Erhitzen des Reaktionsmediums, um die Polymerisation des Monomers und der phenolischen Verbindung und die Vernetzung des dadurch gebildeten Polymers durchzuführen.

2. Verfahren nach Anspruch 1, wobei das Reaktionsmedium frei von Katalysatoren ist.

3. Verfahren nach einem der Ansprüche 1 bis 2, wobei mindestens eine Anfangsphase des Erhitzungsschritts unter reduziertem Druck durchgeführt wird.

4. Verfahren nach Anspruch 3, wobei mindestens eine Anfangsphase des Erhitzungsschritts bei einem Druck zwischen 0 und 900 mbar, vorzugsweise zwischen 400 und 800 mbar, durchgeführt wird.

5. Verfahren nach einem der Ansprüche 1 bis 4, wobei der Erhitzungsschritt in einem Temperaturbereich zwischen 120 und 200 °C für einen Zeitraum von mindestens 4 Stunden durchgeführt wird.

6. Verfahren nach einem der Ansprüche 1 bis 5, wobei die Mischung mindestens eine phenolische Verbindung enthält, die aus der Gruppe bestehend aus Hydroxybenzoesäuren, Hydroxyzimtsäuren und Flavonoiden sowie einer beliebigen Kombination solcher phenolischer Verbindungen ausgewählt ist.

7. Verfahren nach einem der Ansprüche 1 bis 6, wobei die Mischung mindestens p-Cumarsäure und/oder Naringenin enthält.

8. Verfahren nach einem der Ansprüche 1 bis 7, wobei das Monomer eine dihydroxylierte Fettsäure oder ein Ester einer dihydroxylierten Fettsäure und eines Alkohols mit einer linearen oder verzweigten, gesättigten oder ungesättigten, gegebenenfalls substituierten aliphatischen Kette, die 1 bis 18 Kohlenstoffatome umfasst, vorzugsweise 10,16-Dihydroxyhexadecansäure oder deren Methyl- oder Ethylester, ist.

9. Verfahren nach einem der Ansprüche 1 bis 8, wobei die Mischung durch Depolymerisation von Cutin, vorzugsweise Tomatencutin, Gewinnung des erhaltenen Monomerextrakts und Reinigung des Extrakts zum teilweisen Entfernen der in dem Extrakt enthaltenen phenolischen Verbindungen erhalten wird, um so einen Gehalt an phenolischen Verbindungen innerhalb des Wertebereichs zu erhalten.

10. Polymermaterial vom Typ Polyester, das durch ein Verfahren nach einem der Ansprüche 1 bis 9 erhalten wird, als konstituierende Monomereinheiten mindestens eine ω-hydroxylierte Fettsäure und mindestens eine phenolische Verbindung umfasst, eine halbkristalline Struktur aufweist, die Stapel kristalliner Phasen vom hexagonalen Typ umfasst, und eine Menge von 0,03 bis 4,2 Gew.-% an Einheiten der phenolischen Verbindung(en), bezogen auf das Gesamtgewicht des Polymermaterials, enthält, wobei die Menge durch Bestimmung des Gesamtgehalts an phenolischer Verbindung(en) in der zum Herstellen des Polymermaterials verwendeten Mischung, durch spektrophotometrische Bestimmung nach der Reaktion mit dem Folin-Ciocalteu-Reagenz, bezogen auf eine Standardreihe von Gallussäure bestimmt wird, wobei der Gesamtgehalt in einem Wertebereich von 0,3 bis 42 mg Gallussäureäquivalent pro Gramm der Mischung liegt.

11. Polymermaterial nach Anspruch 10, wobei der Schmelzpunkt der kristallinen Phasen über 30 °C, vorzugsweisen zwischen 30 und 70 °C, liegt, wobei die Schmelztemperatur der kristallinen Phasen durch das in der Beschreibung offenbarte Verfahren bestimmt wird.

12. Verwendung eines Polymermaterials nach einem der Ansprüche 10 oder 11 zum Herstellen einer medizinischen Vorrichtung, einer Beschichtung eines Pflanzenschutzmittels, eines Verpackungsartikels oder eines Sportgeräts.

## Claims

1. Method for preparing a polyester polymer material, **characterized in that** it comprises, successively, steps of:
- preparing a reaction medium comprising a mixture of:
• at least one monomer selected from ω-hydroxylated fatty acids and the esters of a ω-hydroxylated fatty acid and of an alcohol having a linear or branched, saturated or unsaturated, optionally substituted, aliphatic chain, said aliphatic chain comprising from 1 to 18 carbon atoms;
• and at least one phenolic compound, the total phenolic compound(s) content, determined by spectrophotometric analysis after reaction with the Folin-Ciocalteu reagent, with respect to a standard range of gallic acid, lying in a range of values from 0.3 to 42 mg equivalent of gallic acid per gram of said mixture,
- and heating this reaction medium to carry out the polymerization of said monomer and of said phenolic compound and the cross-linking of the polymer thus formed.

2. Method according to claim 1, wherein said reaction medium is free from catalyst.

3. Method according to either one of claims 1 to 2, wherein at least an initial phase of the heating step is implemented under reduced pressure.

4. Method according to claim 3, wherein at least an initial phase of the heating step is implemented at a pressure between 0 and 900 mbar, preferentially between 400 and 800 mbar.

5. Method according to any one of claims 1 to 4, wherein said heating step is implemented in a temperature range between 120 and 200°C, for a period of at least 4 hours.

6. Method according to any one of claims 1 to 5, wherein said mixture contains at least one phenolic compound selected from hydroxybenzoic acids, hydroxycinnamic acids and flavonoids, or any combination of such phenolic compounds.

7. Method according to any one of claims 1 to 6, wherein said mixture contains at least p-coumaric acid and/or naringenin.

8. Method according to any one of claims 1 to 7, wherein said monomer is a dihydroxylated fatty acid or an ester of a dihydroxylated fatty acid and of an alcohol having a linear or branched, saturated or unsaturated, optionally substituted, aliphatic chain, comprising from 1 to 18 carbon atoms, preferably 10,16-dihydroxyhexadecanoic acid or the methyl or ethyl ester thereof.

9. Method according to any one of claims 1 to 8, wherein said mixture is obtained by depolymerization of cutin, preferably of tomato cutin, recovery of the monomers extract obtained and purification of said extract to partially eliminate the phenolic compounds contained in said extract, so as to obtain a phenolic compound(s) content lying in said range of values.

10. Polyester polymer material obtained by a method according to any one of claims 1 to 9, comprising as constituent monomer units at least one ω-hydroxylated fatty acid and at least one phenolic compound, having a semicrystalline structure comprising stacks of crystalline phases of the hexagonal type, and containing a quantity of 0.03 to 4.2% by weight of phenolic compound(s) units, with respect to the total weight of said polymer material, this quantity being determined by quantitative analysis of the total content of phenolic compound(s) in the mixture used for preparing said polymer material, by spectrophotometric analysis after reaction with the Folin-Ciocalteu reagent, with respect to a standard range of gallic acid, this total content lying in a range of values from 0.3 to 42 mg equivalent of gallic acid per gram of mixture.

11. Polymer material according to claim 10, wherein the melting point of said crystalline phases is above 30°C, preferably between 30 and 70°C, the melting point of the crystalline phases being determined by the method disclosed in the description.

12. Use of a polymer material according to one of claims 10 or 11 for manufacturing a medical device, a coating of a plant-protection product, a packaging article or a sporting equipment.
